(19) Europäisches Patentamt
European Patent Office
Office européen des brevets

(11) EP 4 393 965 B1

(12) EUROPEAN PATENT SPECIFICATION

(45) Date of publication and mention of the grant of the patent:
**01.10.2025 Bulletin 2025/40**

(21) Application number: **22861128.1**

(22) Date of filing: **08.08.2022**

(51) International Patent Classification (IPC):
***C08F 110/06*** *(2006.01)* ***C08F 4/659*** *(2006.01)*

(52) Cooperative Patent Classification (CPC):
(C-Sets available)
**C08F 110/06;** C08F 4/65912; C08F 4/65916;
C08F 2420/07 (Cont.)

(86) International application number:
**PCT/JP2022/030274**

(87) International publication number:
**WO 2023/026838 (02.03.2023 Gazette 2023/09)**

# (54) BRANCHED PROPYLENE-BASED POLYMER

VERZWEIGTES POLYMER AUF PROPYLENBASIS

POLYMÈRE RAMIFIÉ À BASE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2021 JP 2021135437**

(43) Date of publication of application:
**03.07.2024 Bulletin 2024/27**

(73) Proprietor: **Japan Polypropylene Corporation**
**Tokyo 100-8251 (JP)**

(72) Inventors:
- **ITO, Masaaki**
  **Yokkaichi-shi, Mie 510-0848 (JP)**
- **SHINOZAKI, Jun**
  **Yokkaichi-shi, Mie 510-0848 (JP)**
- **TAKIZAWA, Miori**
  **Yokkaichi-shi, Mie 510-0848 (JP)**
- **NAKANO, Masato**
  **Yokkaichi-shi, Mie 510-0848 (JP)**

(74) Representative: **Hoffmann Eitle**
**Patent- und Rechtsanwälte PartmbB**
**Arabellastraße 30**
**81925 München (DE)**

(56) References cited:

| | |
|---|---|
| **JP-A- 2009 542 872** | **JP-A- 2009 542 872** |
| **JP-A- 2010 070 660** | **JP-A- 2010 070 660** |
| **JP-A- 2020 189 966** | **JP-A- 2020 189 966** |
| **JP-A- 2022 024 535** | **JP-A- 2022 024 535** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 110/06, C08F 4/65904;**
**C08F 110/06, C08F 4/65927, C08F 4/65927;**
C08F 110/06, C08F 2500/09, C08F 2500/12, C08F 2500/17, C08F 2500/34, C08F 2500/35, C08F 2500/38

## Description

### Technical Field

The present invention relates to a branched propylene-based polymer.

### Background Art

In recent years, much research has been conducted for the improvement of suitability of polypropylene for sheet molding, blow molding, heat molding, foam molding and the like, in each of which a material with relatively high melt tension is necessary, by introducing a branched structure to polypropylene.

Recently, as a method for introducing a branched structure to polypropylene, a macromer copolymerization method using a metallocene catalyst, has been mainly proposed. A branched polypropylene obtained by the macromer copolymerization method is advantageous in that gel production owing to a crosslinking reaction is small compared to polypropylene to which a branched structure has been introduced by irradiation with electron beam or the like.

As the macromer copolymerization method, for example, a method in which a propylene macromer having a vinyl structure at a terminal is produced by use of a specific catalyst and a specific polymerization condition in the first step of the polymerization (i.e., a macromer synthesis process) and propylene and the propylene macromer are copolymerized by use of a specific catalyst and a specific polymerization condition in the second step of the polymerization (i.e., a macromer copolymerization process), has been proposed. The branched polypropylene thus obtained is shown to have high melt strength and high melt tension (for example, see Patent Documents 1 and 2).

Also, a single-stage polymerization method in which a macromer synthesis process and a macromer copolymerization process are implemented at the same time by use of a specific metallocene catalyst, has been proposed, and a branched polypropylene thus obtained is shown to have improved melt strength (for example, see Patent Document 3).

Also, a multi-stage polymerization method has been suggested, which uses a catalyst that contains two kinds of specific metallocene compounds, more specifically, a catalyst obtained by combining metallocene compounds (such as rac-$SiMe_2$[2-Me-4-Ph-Ind]$_2ZrCl_2$ and rac-$SiMe_2$[2-Me-4-Ph-Ind]$_2HfC1_2$) with a silica on which methylaluminoxane (MAO) is supported. The branched polypropylene thus obtained is reported to show relatively high melt tension (see Patent Document 4).

Also, a method using a catalyst containing a specific metallocene compound and an ion-exchange layered silicate has been proposed, and a branched polypropylene thus obtained is reported to have a wide molecular weight distribution, many branches, and good melt tension (see Patent Document 5).

Another method has been proposed, in which a propylene-based polymer having a strain hardening index ($\lambda$max) of 2.0 or more in melt tension measurement, is produced by use of a catalyst containing several specific metallocene compounds, and a branched polypropylene thus obtained is reported to have good melt tension (see Patent Document 6).

Patent Document 7 discloses that propylene is polymerized by use of a catalyst in which a single metallocene catalyst is supported on silica having a very low porosity, thereby introducing short-chain branches having a specific branching degree and relatively large amounts of amorphous moieties, and obtaining a branched polypropylene with a good balance between mechanical properties and production properties, accordingly.

### Citation List

### Patent Documents

Patent Document 1: Japanese translation of PCT International Application No. 2001-525460
Patent Document 2: Japanese Patent Application Laid-Open (JP-A) No. H10-338717
Patent Document 3: Japanese translation of PCT International Application No. 2002-523575
Patent Document 4: JP-A No. 2001-64314
Patent Document 5: JP-A No. 2007-154121
Patent Document 6: JP-A No. 2009-57542
Patent Document 7: Japanese translation of PCT international application No. 2009-542872


### Summary of Invention

Technical Problem

However, the branched polypropylenes obtained by the macromer copolymerization methods disclosed in Patent Documents 1 to 6 have the following problem: the ductility of the polypropylene melts is insufficient, while the branched polypropylenes have high melt tension and improved suitability for sheet molding, blow molding, heat molding, foam molding and the like.

The mechanical properties of the branched polypropylene obtained by the method disclosed in Patent Document 7, are improved by increasing the content of the amorphous moieties; however, the strain hardening index at the fast strain rate (SHI@$1s^{-1}$) is not very high. Accordingly, the branched polypropylene cannot show satisfactory moldability when molded by various kinds of molding methods.

An object of the present invention is to provide a branched propylene-based polymer that is excellent in ductility when melting, while retaining melt tension necessary for molding.

Solution to Problem

The branched propylene-based polymer according to the present invention is a branched propylene-based polymer having the following properties (1), (2) and (3):

property (1): a multi-branching index (MBI) is 0.45 or more and 1.00 or less;
property (2): a strain hardening index at a strain rate ($d\varepsilon/dt$) of 1.0/sec (SHI@$1s^{-1}$) is 0.70 or more and 3.00 or less; and
property (3): a maximum drawing rate (MaxDraw) at 230°C and a melt flow rate (MFR) satisfy a relation represented by the following formula (1-1):

$$(\mathrm{MaxDraw}) > 112\times\log(\mathrm{MFR})+30 \quad \text{Formula (1-1)},$$

wherein the multi-branching index (MBI) is a slope when plotting a logarithm of a strain rate ($\log(d\varepsilon/dt)$) on the x-axis and a strain hardening index (SHI) at a strain rate of from 0.01/sec to 1.0/sec on the y-axis, while obtaining the strain hardening index (SHI) at a strain rate ($d\varepsilon/dt$) of from 0.01/sec to 1.0/sec;
wherein the strain hardening index (SHI) is a slope when, in elongational viscosity measurement at a temperature of 180°C and a given strain rate ($d\varepsilon/dt$), plotting a logarithm of a Hencky strain ($\varepsilon$) ($\log(\varepsilon)$) on the x-axis and a logarithm of an elongational viscosity ($\eta E$) ($\log(\eta E)$) on the y-axis in an interval between Hencky strains 1 and 3;
wherein the maximum drawing rate (MaxDraw) at 230°C is a drawing rate (unit: m/min) just before a string-shaped product is broken, when the drawing rate is increased from 4.0 m/min to 200.0 m/min at an acceleration rate of 1.8 $cm/s^2$ while extruding a resin in a string form in the following conditions and drawing and winding the string-shaped resin on a roller:
resin temperature: 230°C
capillary: 2.0 mm in diameter, 40 mm in length
cylinder diameter: 9.55 mm
cylinder extrusion speed: 20 mm/min; and
wherein the melt flow rate (MFR) is a melt flow rate (MFR) (unit: g/10 min) measured at a temperature of 230°C and a load of 2.16 kg.

Advantageous Effects of Invention

According to the present invention, a branched propylene-based polymer that is excellent in ductility when melting, while retaining melt tension necessary for molding, is provided.

Brief Description of the Drawings

In the accompanying drawings,

FIG. 1A is a schematic view illustrating that not too many molecular chain entanglement points appear when the branched propylene-based polymer contains many branches short in branched chain length in the high-molecular-weight region of the molecular weight distribution;
FIG. 1B is a schematic view illustrating that many molecular chain entanglement points appear when the branched propylene-based polymer contains many branches long in branched chain length in the high-molecular-weight region of the molecular weight distribution;

FIG. 2 is an exemplary plot for obtaining a strain hardening index (SHI);
FIG. 3 is an exemplary plot for obtaining a multi-branching index (MBI);
FIG. 4 is a view illustrating the baseline and interval of a chromatogram in GPC;
FIG. 5 is a graph with the log (MFR), which is the logarithm of the MFR (MFR 230°C, load 2.16 kg), on the x-axis and the maximum drawing rate (MaxDraw) at 230°C on the y-axis, in which the data of branched propylene-based polymers obtained in examples and comparative examples are plotted;
FIG. 6 is a graph with the log(MT), which is the logarithm of the melt tension (MT) at 230°C, on the x-axis and the maximum drawing rate (MaxDraw) at 230°C on the y-axis, in which the data of the branched propylene-based polymers obtained in the examples and the comparative examples are plotted; and
FIG. 7 is a graph with the MFR (MFR 230°C, load 2.16 kg) on the x-axis and the multi-branching index (MBI) on the y-axis, in which the data of the branched propylene-based polymers obtained in the examples and the comparative examples are plotted.

## Description of Embodiments

The inventors found the following design concept: to improve the ductility of a branched propylene-based polymer, it is preferable to incorporate components having a long (but not too long) relaxation time in the high-molecular-weight region of the molecular weight distribution of the branched propylene-based polymer. Based on this design concept, a branched propylene-based polymer was synthesized so as to contain multi-branching molecules having a molecular structure in which many branched chains shorter in branched chain length than conventional branched propylene-based polymers, were introduced per molecule. As a result, a branched propylene-based polymer with improved ductility was successfully obtained.

It is thought as follows in the case where, as shown in FIG. 1A, the branched propylene-based polymer contains multi-branched molecules which contain many branches short in branched chain length in the high-molecular-weight region of the molecular weight distribution: an appropriate number of molecular chain entanglement points appear when the branched propylene-based polymer strains; the branched propylene-based polymer shows a relaxation time distribution in which the amount of components having a certain short relaxation time is large and the amount of components having an extraordinarily long relaxation time is small; accordingly, local orientational crystallization starting from the molecular chain entanglement points is less likely to occur; therefore, the ductility improves since non-uniform orientational crystallization can be suppressed.

Meanwhile, it is thought as follows in the case where, as shown in FIG. 1B, the branched propylene-based polymer contains multi-branched molecules which contain many branches too long in branched chain length in the high-molecular-weight region: since many molecular chain entanglement points appear when the branched propylene-based polymer strains, there are many unrelaxed components or many components having a long relaxation time; accordingly, local orientational crystallization proceeds at many parts in the polymer from the molecular chain entanglement points; therefore, non-uniform orientational crystallization occurs, and the ductility is poor.

That is, the branched propylene-based polymer of the present invention is estimated to have the molecular structure following such a design concept, that many long-chain branches relatively short in length are introduced into the high-molecular-weight region of the molecular weight distribution; meanwhile, the branched propylene-based polymer has property values described later and is a polymer that is excellent in ductility when melting, while retaining melt tension necessary for molding.

Hereinafter, the present invention will be explained in detail. In the present Description, "to" which shows a numerical range is used to describe a range in which the numerical values described before and after "to" indicate the lower limit value and the upper limit value.

In the present invention, the logarithm means a common logarithm, that is, it is a decadic logarithm.

Also in the present invention, the ductility means a resin property such that molten resin can spread widely, thinly and evenly or can spread narrowly, long and evenly.

## I. Branched propylene-based polymer of the present invention

The branched propylene-based polymer of the present invention has the following properties (1), (2) and (3), and it preferably has one or more of the following properties (4) to (12).

The multi-branching index (MBI) can be used as an index to get the degree of the ductility of the molten resin, and the strain hardening index (SHI) can be used as an index to get the degree of the melt tension of the molten resin. The formula of MaxDraw-MFR relation can be used as an index of the ductility relative to the fluidity. In the present invention, each of the multi-branching index (MBI) defined in the property (1) and the strain hardening index (SHI) defined in the property (2) is specified in a certain range, and the MaxDraw and the MFR satisfy the formula (1-1) defined in the property (3). Accordingly, such a branched propylene-based polymer that is excellent in ductility when melting, while retaining melt

tension necessary for molding, is provided.

Property (1):

The multi-branching index (MBI) of the branched propylene-based polymer of the present invention is 0.45 or more and 1.00 or less.

The multi-branching index (MBI) is a slope when plotting a logarithm of a strain rate (log(dε/dt)) on the x-axis and a strain hardening index (SHI) at a strain rate of from 0.01/sec to 1.0/sec on the y-axis, while obtaining the strain hardening index (SHI) of a polymer at a strain rate (dε/dt) of from 0.01/sec to 1.0/sec.

The strain hardening index of a polymer changes by the strain rate (dε/dt). The multi-branching index (MBI) indicates the dependence of the strain hardening index (SHI) on the strain rate (dε/dt), and it means that as the value of the multi-branching index (MBI) increases, the strain hardening index (SHI) largely increases along with an increase in strain rate (dε/dt).

The strain hardening index (SHI) is a slope when, in the elongational viscosity measurement of a polymer at a temperature of 180°C and a given strain rate (dε/dt), plotting a logarithm of a Hencky strain (ε) (log(ε)) on the x-axis and a logarithm of an elongational viscosity (ηE) (log(ηE)) on the y-axis in an interval between Hencky strains 1 and 3.

The strain hardening index (SHI) shows the strain hardenability of a polymer when the polymer is strained at a given strain rate (dε/dt). In the case of a polymer that shows a large strain hardening index (SHI) at a given strain rate (dε/dt), when the polymer is strained at the given strain rate (dε/dt), the strain is not relaxed, and the elongational viscosity increases as the strain amount increases.

(Method for measuring the elongational viscosity, calculation of the strain hardening index (SHI) at each strain rate (dε/dt), and calculation of the multi-branching index (MBI))

The strain hardening index (SHI) and the multi-branching index (MBI) can be obtained by, for example, uniaxial elongational viscosity measurement using the measurement devices and measurement method as described in Polymer, Vol. 42, p. 8663

(2001). In the present invention, the strain hardening index (SHI) at each strain rate (dε/dt) can be measured by the following measurement method.

Device: ARES (manufactured by Rheometrics)
Jig: EXTENTIONAL VISCOSITY FIXTURE (manufactured by TA Instruments)
Measurement temperature: 180°C
Strain rates: 1.0/sec, 0.1/sec, 0.01/sec
Production of test piece: A 18 mm × 10 mm sheet (thickness 0.7 mm) is produced by press molding.

FIG. 2 is an exemplary plot for obtaining a strain hardening index (SHI). By the above-described measurement method, the data on time-dependent changes in the elongational viscosity (ηE) are obtained at a given strain rate (dε/dt); the measured data are plotted on a graph with the logarithm of Hencky strain (ε) (log(ε)) on the x-axis and the logarithm of the elongational viscosity (ηE) (log(ηE)) on the y-axis; and the slope of a line through two points of Hencky strains of 1 and 3, is determined as the strain hardening index (SHI) at the strain rate (dε/dt) in the measurement condition.

FIG. 3 is an exemplary plot for obtaining a multi-branching index (MBI). By the above-described measurement method, strain hardening indices (SHI) at several strain rates (dε/dt) in a range of from 0.01/sec to 1.0/sec are measured; the strain hardening indices (SHI) at the strain rates are plotted on the graph with the logarithm of the strain rate (log(dε/dt)) on the x-axis and the strain hardening index (SHI) on the y-axis; and the slope of the approximate straight line of the plot in a range of strain rate from 0.01/sec to 1.0/sec, is determined as the multi-branching index (MBI). In the example shown in FIG. 3, the plot of three points (SHI@$0.01s^{-1}$, SHI@$0.1s^{-1}$ and SHI@$1.0s^{-1}$) was approximated to be a straight line by the least-squares method, and the slope of the straight line was determined as the multi-branching index (MBI).

In general, as the amount of components having a long relaxation time in a polymer increases, the polymer shows a higher strain hardenability even at a slow strain rate. The relaxation time of the polymer depends on the structure of the polymer molecules, such as the molecular weight, the presence or absence of the branches, the amount of the branches, and the length of the branched chains.

Especially in the case of the branched propylene-based polymer, the relaxation time becomes longer as the branched chain length increases. When the branched chain length of the branched propylene-based polymer is very long, the relaxation time of the branched propylene-based polymer is very long. Accordingly, the polymer exhibits a high strain hardenability even at a slow strain rate.

On the other hand, when the branched chain length is short, the relaxation time of the branched propylene-based polymer is short. Accordingly, at a fast strain rate, the branched propylene-based polymer is not relaxed and shows a high

strain hardenability. However, at a slow strain rate, the branched propylene-based polymer is relaxed and the strain hardenability decreases.

For the branched propylene-based polymer as a macromolecular aggregate, accordingly, the dependence of the strain hardening index with respect to the strain rate, that is, the multi-branching index (MBI) is varied by the combination of the components having a long relaxation time with those having a short relaxation time, and by the contents of the components.

When there are many unrelaxed components or many components having a long relaxation time in the branched propylene-based polymer, local orientational crystallization proceeds at many parts in the polymer from the molecular chain entanglement points. Accordingly, since non-uniform orientational crystallization occurs, the ductility deteriorates.

Meanwhile, when the branched propylene-based polymer contains many multi-branching molecules having many branches short in branched chain length per molecule in the high-molecular-weight region of the molecular weight distribution, the branched propylene-based polymer shows a relaxation time distribution in which the amount of components having a certain short relaxation time is large and the amount of components having an extraordinarily long relaxation time is small. Accordingly, since local orientational crystallization starting from the molecular chain entanglement points is less likely to occur and non-uniform orientational crystallization can be suppressed, the ductility improves.

To obtain excellent ductility of the branched propylene-based polymer of the present invention when melting, the lower limit of the multi-branching index (MBI) of the branched propylene-based polymer is 0.45 or more, preferably 0.46 or more, more preferably 0.47 or more, and still more preferably 0.48 or more. To obtain the stability of the melt tension by suppressing the strain rate dependence of the strain hardening index, the upper limit of the multi-branching index (MBI) of the branched propylene-based polymer of the present invention is 1.00 or less, preferably 0.80 or less, and more preferably 0.60 or less. Meanwhile, the branched propylene-based polymer of the present invention in which the melt flow rate (MFR) measured at a temperature of 230°C and a load of 2.16 kg is large, can be molded even when the melt tension is relatively small, and a good balance between the ductility and melt tension is likely to be obtained in mold processing, even when the multi-branching index (MBI) is large. For example, in view of excellent ductility relative to the fluidity and excellent ductility relative to the melt tension, the multi-branching index (MBI) of the branched propylene-based polymer of the present invention having a MFR of 4.5 g/10 min or more, is preferably more than 0.60 and 1.00 or less, and more preferably more than 0.60 and 0.90 or less. Meanwhile, in view of excellent ductility relative to the fluidity and ductility relative to the melt tension, the multi-branching index (MBI) of the branched propylene-based polymer of the present invention having a MFR of less than 4.5 g/10 min, is preferably 0.45 or more and 0.60 or less.

Since the multi-branching index (MBI) of the branched propylene-based polymer is 0.45 or more and 1.00 or less, the relaxation does not occur at a fast strain rate (1.0/sec) and the strain hardening index (SHI@1.0/sec) is large; meanwhile, the relaxation occurs at a slow strain rate (0.01/sec) and the strain hardening index (SHI@0.01/sec) is small. Accordingly, since the branched propylene-based polymer of the present disclosure shows the relaxation time distribution in which the amount of the components having a certain short relaxation time is large and the amount of the components having an extraordinarily long relaxation time is small, the branched propylene-based polymer of the present disclosure has excellent ductility.

Even if the branched propylene-based polymer has the strain hardening index (SHI@$1s^{-1}$) in the specific range defined in the following property (2), when the multi-branching index (MBI) is too small, the strain rate dependence of the strain hardening index (SHI) is too small. Accordingly, even at a slow strain rate such as 0.01/sec or 0.1/sec, the branched propylene-based polymer shows a large strain hardening index which is not much different from the strain hardening index at a strain rate of 1/sec (SHI@$1s^{-1}$). In this case, accordingly, the branched propylene-based polymer contains many components having a long relaxation time, and it has poor ductility. Especially, the ductility relative to the fluidity or to the melt tension is likely to deteriorate.

Even if the branched propylene-based polymer has the strain hardening index (SHI@$1s^{-1}$) in the specific range defined in the following property (2), when the multi-branching index (MBI) is more than 1.0, the strain rate dependence of the strain hardening index (SHI) is too large. Accordingly, only a slight change of the strain rate causes a change of the strain hardening index, and the melt tension is likely to be unstable. In this case, accordingly, there are problems such as a molding failure and a difficulty in controlling the molding process condition, during the molding of the branched propylene-based polymer.

The strain hardening index and the multi-branching index (MBI) indicated by the strain rate dependence of the strain hardening index, can be adjusted by controlling the amount or length of the branched chains in the branched propylene-based polymer.

For example, the degree of the molecular weight of macromer obtained in the macromer synthesis process, correlates with the length of the branched chains.

Accordingly, the degree of the molecular weight of the macromer can be adjusted by the selection of, in a combination of a metallocene complex that mainly makes a contribution to the synthesis of a macromer and a metallocene complex that mainly makes a contribution to the copolymerization of propylene and a macromer, the metallocene complex

that mainly makes a contribution to the synthesis of a macromer. More specifically, the degree of the molecular weight of the macromer can be adjusted by introducing appropriate substituents in the 2- and 4-positions of the indene skeleton of the metallocene.

In addition, since the macromer is produced through β-hydrogen elimination from the growing chain ends, the molecular weight of the macromer can be decreased by increasing the polymerization temperature and fastening the β-hydrogen elimination reaction relative to the propylene insertion-growth reaction.

As for the amount of the branches, the degree of the ratio of the propylene to the macromer in the process of copolymerizing the propylene and the macromer, correlates with the degree of the amount of the branched chains. More specifically, the degree of the amount of the incorporated macromer can be adjusted by the selection of the activity of the metallocene complex that makes a contribution to the synthesis of the macromer and the activity of the metallocene complex that mainly makes a contribution to the copolymerization of the propylene and the macromer.

As another method, the degree of the amount of the incorporated macromer can be adjusted by the selection of the usage of the metallocene complex that makes a contribution to the synthesis of the macromer and the usage of the metallocene complex that mainly makes a contribution to the copolymerization of the propylene and the macromer.

Property (2):

The strain hardening index at a strain rate (dε/dt) of 1.0/sec (SHI@1s$^{-1}$) of the branched propylene-based polymer of the present invention is 0.70 or more and 3.00 or less.

The strain hardening index at 1.0/sec (SHI@1s$^{-1}$) is a slope when, in elongational viscosity measurement at a temperature of 180°C and a strain rate (dε/dt) of 1.0/sec, plotting a logarithm of a Hencky strain (ε) (log(ε)) on the x-axis and a logarithm of an elongational viscosity (ηE) (log(ηE)) on the y-axis in an interval between Hencky strains 1 and 3.

From the viewpoint of improving the moldability by increasing the ductility and of increasing the melt tension, the lower limit of the strain hardening index (SHI@1s$^{-1}$) of the branched propylene-based polymer of the present invention in the elongational viscosity measurement, is preferably 1.00 or more, more preferably 1.30 or more, and still more preferably 1.60 or more. On the other hand, the upper limit of the strain hardening index (SHI@1s$^{-1}$) is preferably 2.50 or less, more preferably 2.00 or less, and still more preferably 1.80 or less.

The branched propylene-based polymer showing large strain hardening index to a certain degree at a fast strain rate (SHI@1s$^{-1}$) is likely to have large elongational viscosity, since the components that are not relaxed at a fast strain rate are present in the polymer. Accordingly, compared to a linear polymer having no strain hardenability at a fast strain rate or to a polymer having a similar MFR and a small strain hardening index (SHI@1s$^{-1}$), the elongational viscosity of the branched propylene-based polymer becomes high and leads to an increase in the melt tension. As a result, the moldability improves. Based on this point of view, the strain hardening index (SHI@1s$^{-1}$) of the branched propylene-based polymer of the present invention is 0.70 or more.

On the other hand, when the strain hardening index of the branched propylene-based polymer at a fast strain rate (SHI@1s$^{-1}$) is too large, there is the following problem: since there are many unrelaxed components or many components having a long relaxation time in the branched propylene-based polymer, local orientational crystallization proceeds from the molecular chain entanglement points and leads to poor ductility. Based on this point of view, the strain hardening index (SHI@1s$^{-1}$) of the branched propylene-based polymer of the present invention is 3.00 or less.

Property (3):

In the branched propylene-based polymer of the present invention, the maximum drawing rate (MaxDraw) at 230°C and the melt flow rate (MFR) satisfy the relation represented by the following formula (1-1), and preferably satisfy the relation represented by the following formula (1-2). Also, they may satisfy the relation represented by the following formula (1-3), or they may satisfy the relation represented by the following formula (1-4).

$$(\mathrm{MaxDraw}) > 112\times\log(\mathrm{MFR})+30 \quad \text{Formula (1-1)}$$

$$(\mathrm{MaxDraw}) > 112\times\log(\mathrm{MFR})+51 \quad \text{Formula (1-2)}$$

$$(\mathrm{MaxDraw}) < 112\times\log(\mathrm{MFR})+150 \quad \text{Formula (1-3)}$$

$$(\mathrm{MaxDraw}) < 112\times\log(\mathrm{MFR})+120 \quad \text{Formula (1-4)}$$

The maximum drawing rate (MaxDraw) at 230°C is a drawing rate (unit: m/min) just before a string-shaped

product is broken, when the drawing rate is gradually increased from 4.0 m/min to 200.0 m/min at an acceleration rate of 1.8 $cm/s^2$ while extruding a resin in a string form in the following conditions and drawing and winding the string-shaped resin on a roller:

capillary: 2.0 mm in diameter, 40 mm in length
cylinder diameter: 9.55 mm
cylinder extrusion speed: 20 mm/min.

The maximum drawing rate (MaxDraw) can be measured by use of a melt tension tester (product name: CAPILOGRAPH 1B, manufactured by: Toyo Seiki Seisaku-sho, Ltd.)

The MFR is a melt flow rate (MFR) (unit: g/10 min) measured at a temperature of 230°C and a load of 2.16 kg.

In the present invention, the melt flow rate (MFR) is a value measured in accordance with JIS K6921-2 "Plastic-Polypropylene (PP) molding and extrusion materials - Part 2: Method for preparing test pieces and method for obtaining the properties thereof" in the following test condition: 230°C and a load of 2.16 kgf.

The melt flow rate (MFR) can be easily adjusted by changing the polymerization temperature or pressure, or it can be easily adjusted by a common method such as adding a chain transfer agent (e.g., hydrogen) during polymerization.

In general, there is a problem that as the fluidity increases, the ductility improves while the melt tension decreases. Accordingly, the branched propylene-based polymer of the present invention is needed to be a propylene-based polymer having both melt tension necessary for molding and excellent ductility. Satisfying the formula (1-1) or (1-2) indicates the following: compared to conventional propylene-based polymers, the branched propylene-based polymer of the present invention is excellent in the ductility relative to the fluidity.

That is, to differentiate the branched propylene-based polymer of the present invention from conventional propylene-based polymers, considering that the maximum drawing rate (MaxDraw) is a function positively correlated with an increase in the fluidity (MFR), the parameters of the function are set, and it is shown that relative to the fluidity, the maximum drawing rate (MaxDraw) of the branched propylene-based polymer of the present invention is larger than the maximum drawing rate (MaxDraw) of conventional propylene-based polymers, which is defined by the function. More specifically, based on the data of the examples and the comparative examples, the value of the maximum drawing rate (MaxDraw) and that of the fluidity (MFR) are assumed, which distinguish between the examples and the comparative examples (the prior art); and then, the parameters of the relation established between the maximum drawing rate (MaxDraw) and the fluidity (MFR) are determined by the least-squares method.

Since the branched propylene-based polymer of the present invention is excellent in the ductility relative to the fluidity, it retains melt tension necessary for molding, and it shows excellent ductility even when the fluidity is low.

From the viewpoint of ease of production, the branched propylene-based polymer of the present invention satisfying the formula (1-3) or (1-4) is preferred.

Property (4):

In the branched propylene-based polymer of the present invention, the maximum drawing rate (MaxDraw) at 230°C and the melt tension (MT) preferably satisfy the relation represented by the following formula (2-1), and more preferably the relation represented by the following formula (2-2). Also, they may satisfy the relation represented by the following formula (2-3) or they may satisfy the relation represented by the following formula (2-4).

$$(\mathrm{MaxDraw}) > -119\times\log(\mathrm{MT})+200 \quad \text{Formula (2-1)}$$

$$(\mathrm{MaxDraw}) > -119\times\log(\mathrm{MT})+220 \quad \text{Formula (2-2)}$$

$$(\mathrm{MaxDraw}) < -119\times\log(\mathrm{MT})+280 \quad \text{Formula (2-3)}$$

$$(\mathrm{MaxDraw}) < -119\times\log(\mathrm{MT})+260 \quad \text{Formula (2-4)}$$

The maximum drawing rate (MaxDraw) at 230°C is as described above under "Property (3)".

The melt tension (MT) is a tension (unit: g) detected when drawing and winding the string-shaped resin on the roller at a drawing rate of 4.0 m/min in the measurement of the maximum drawing rate (MaxDraw) at 230°C. That is, using a melt tension tester (product name: CAPILOGRAPH 1B, manufactured by: Toyo Seiki Seisaku-sho, Ltd.), at a resin temperature of 230°C, the resin is extruded in a string form in the following condition, and the extruded resin is drawn and wound on a roller. The tension detected by a pulley when drawing and winding the resin on the roller is determined as the

melt tension (MT) at 230°C.

Capillary: 2.0 mm in diameter, 40 mm in length
Cylinder diameter: 9.55 mm
Cylinder extrusion speed: 20 mm/min
Drawing rate: 4.0 m/min

When resin breakage occurs at a drawing rate of 4.0 m/min, it is determined that "the melt tension is non-evaluable".

Satisfying the formula (2-1) or (2-2) indicates the following: compared to conventional propylene-based polymers, the branched propylene-based polymer of the present invention is such that, relative to the melt tension, the ductility when melting is high.

That is, to differentiate the branched propylene-based polymer of the present invention from conventional propylene-based polymers, considering that the maximum drawing rate (MaxDraw) is a function negatively correlated with an increase in the melt tension (MT), the parameters of the function are set, and it is shown that relative to the melt tension, the maximum drawing rate (MaxDraw) of the branched propylene-based polymer of the present invention is larger than the maximum drawing rate (MaxDraw) of conventional propylene-based polymers, which is defined by the function. More specifically, based on the data of the examples and the comparative examples, the value of the maximum drawing rate (MaxDraw) and that of the melt tension (MT) are assumed, which distinguish between the examples and the comparative examples (the prior art); and then, the parameters of the relation established between the maximum drawing rate (MaxDraw) and the melt tension (MT) are determined by the least-squares method.

From the viewpoint of ease of production, the branched propylene-based polymer of the present invention satisfying the formula (2-3) or (2-4) is preferred.

Property (5):

In the branched propylene-based polymer of the present invention, the percentage of the component soluble to p-xylene at 25°C (CXS) is preferably less than 0.5% by mass.

The CXS is used as an index of the ratio of low-stereoregular components and low-molecular-weight components contained in the branched propylene-based polymer. When the CXS is too large, the amount of the low-molecular-weight components or low-stereoregular components increases, and there is an influence on various kinds of physical properties.

The CXS is more preferably 0.4% by mass or less, and still more preferably 0.3% by mass or less.

The lower limit of the CXS is not limited. From the viewpoint of the texture of the molded product, it is preferably 0.1% by mass or more, and more preferably 0.2% by mass or more.

In the present invention, the method for measuring the CXS is as follows.

First, a sample (2 g) is dissolved in 300 ml p-xylene (containing 0.5 mg/ml BHT) at 130°C to prepare a solution. This solution is left to stand at 25°C for 48 hours. Then, a precipitate and a filtrate are separated from each other by filtering the solution. From the filtrate, p-xylene is evaporated, and the filtrate is further dried under pressure at 100°C for 12 hours, thereby recovering the component dissolved in the p-xylene at 25°C. The value of the percentage of the mass of the recovered component with respect to the mass of the sample, is determined as the CXS.

To control the CXS, a crosslinkable indene or azulene complex is preferably selected as the metallocene complex as the catalyst component so that the amount of the low-molecular-weight components is relatively small and the stereoregularity becomes high. Especially, by adjusting the bulkiness of the substituent at the 2- or 4-position, the CXS can be controlled. In the case of combining two complexes, the entire CXS can be controlled by the selection of a high-stereoregular complex and by adjusting the ratio of the complex.

When the amount of an organoaluminum compound, which is a catalyst component, is increased, the organoaluminum compound is coordinated to a part of the complex to modify the complex, thereby increasing the amount of the low-molecular-weight components or decreasing the stereoregularity. Accordingly, the CXS can be controlled by optimizing the amount of the organoaluminum compound.

Property (6):

In the branched propylene-based polymer of the present invention, the number average molecular weight (Mn) of the branched side chains of the branched propylene-based polymer is preferably 11,000 or more and 30,000 or less.

A reference document (Macromolecules, Vol. 31, p. 1335 (1998)) describes that isotactic polypropylene is found to have an entanglement molecular weight of 6900 g/mol.

Another reference document (Macromolecules, Vol. 35, p. 10062 (2002)) describes that viscoelasticity is less

affected when the branch length of a propylene-based polymer is 7000 g/mol or less.

In light of these reference documents, to exert viscoelasticity behaviors such as strain hardening, the branched chain length needs to be 6900 g/mol to 7000 g/mol or more, as the entanglement molecular weight of polypropylene.

This corresponds to about 400 or more, in terms of the number of skeleton carbons. As used herein, the term "skeleton carbons" means all carbons except methyl carbon when polymerizing propylene alone or copolymerizing propylene with ethylene. When butene is used in addition to the monomer, the term "skeleton carbons" means all carbon atoms other than methyl carbons and ethyl carbons.

Accordingly, the branched chain length of the branched propylene-based polymer of the present invention is, in terms of the number of skeleton carbons, preferably 500 or more (polypropylene equivalent molecular weight: 11,000 or more), more preferably 600 or more (polypropylene equivalent molecular weight: 13,000 or more), and still more preferably 700 or more (polypropylene equivalent molecular weight: 15,000 or more) so that the strain hardening index is large at a fast strain rate and melt tension necessary for molding is obtained.

The length of the branches of the branched propylene-based polymer of the present invention is, in terms of the number of skeleton carbons, preferably 1450 or less (polypropylene equivalent molecular weight: 30,000 or less), more preferably 1350 or less (polypropylene equivalent molecular weight: 28,000 or less), and still more preferably 1300 or less (polypropylene equivalent molecular weight: 27,000 or less) so that the strain hardening index is large at a fast strain rate and melt tension necessary for molding is obtained, while the strain is sufficiently relaxed and the strain hardenability becomes small at a slow strain rate.

In a strict sense, the value of the above-mentioned polypropylene equivalent molecular weight is different from a molecular weight value measured by GPC. However, it is close to a number average molecular weight (Mn) measured by GPC. The length of the branches of the branched propylene-based polymer cannot be directly measured. However, each macromer corresponding to the branch part is synthesized by propylene polymerization in the same condition as the production of the branched propylene-based polymer of the present invention; the number average molecular weight (Mn) of the macromers is measured by GPC by the method described below under "Examples"; and the measured number average molecular weight (Mn) can be presumed to be the branch length.

Accordingly, the lower limit of the branched chain length of the branched propylene-based polymer of the present invention is, as the number average molecular weight (Mn) measured by GPC, preferably 11,000 or more, more preferably 13,000 or more, and still more preferably 15,000 or more. On the other hand, the upper limit of the branched chain length of the branched propylene-based polymer of the present invention is, as the number average molecular weight (Mn) measured by GPC, preferably 30,000 or less, more preferably 28,000 or less, and still more preferably 27,000 or less.

(Molecular weight measuring method)

The molecular weight is obtained by gel permeation chromatography (GPC) as a number average molecular weight (Mn), a weight average molecular weight (Mw) and a Q value(Mw/Mn).

The methods and devices used to measure the molecular weight are as follows.

Device: GPC (ALC/GPC, 150C) manufactured by Waters Corporation
Detector: IR detector MIRAN 1A manufactured by FOXBORO (Measurement wavelength: 3.42 μm)
Column: AD806M/S (three sets) manufactured by Showa Denko K.K.
Mobile phase solvent: o-Dichlorobenzene (ODCB)
Measurement temperature: 140°C
Flow rate: 1.0 mL/min
Injected amount: 0.2 mL

Sample preparation is carried out as follows: a sample and ODCB (containing 0.5 mg/mL of dibutylhydroxytoluene (BHT)) are mixed at a ratio that gives a sample concentration of 1 mg/mL, and the sample is dissolved at 140°C for about one hour.

The baseline and interval of the obtained chromatogram are determined as shown in FIG. 4.

A retention capacity obtained by GPC is converted into a molecular weight by use of a calibration curve created preliminarily with standard polystyrenes. The standard polystyrenes used are the following products manufactured by Tosoh Corporation: F380, F288, F128, F80, F40, F20, F10, F4, F1, A5000, A2500 and A1000.

A calibration curve is created by injecting 0.2 mL of a solution in which the standard polystyrenes are dissolved in ODCB (containing 0.5 mg/mL of BHT) so that they are 0.5 mg/mL each. The calibration curve uses a cubic equation obtained by approximation by the least-squares method.

A viscosity equation used for the conversion into the molecular weight, i.e., $[\eta] = K \times M^{\alpha}$, uses the following numerical values.

$$PS: K = 1.38\times10^{-4},\ \alpha = 0.7$$

$$PP: K = 1.03\times10^{-4},\ \alpha = 0.78$$

Property (7):

In the branched propylene-based polymer of the present invention, the melt flow rate (MFR) measured at a temperature of 230°C and a load of 2.16 kg is preferably 1.0 g/10 min or more and 10.0 g/10 min or less.

The MFR is an index of the fluidity of the polymer when melting. The MFR decreases as the molecular weight of a polymer increases. When the MFR is too small, the fluidity of the polymer when melting deteriorates, and heat molding becomes difficult. On the other hand, the MFR increases as the molecular weight of a polymer decreases. When the MFR is too large, a decrease in the melt tension occurs. When the MFR is large, the fluidity of the polymer when melting improves. However, the impact strength may decrease.

From the viewpoint of heat moldability, the MFR of the branched propylene-based polymer of the present invention is preferably 1.0 g/10 min or more, and more preferably 2.0 g/10 min or more. On the other hand, from the viewpoint of melt tension and impact strength, the MFR of the branched propylene-based polymer of the present invention is preferably 10.0 g/10 min or less, more preferably 8.0 g/10 min or less, and still more preferably 6.0 g/10 min or less. The most preferred MFR range is 1.0 g/10 min or more and 6.0 g/10 min or less.

Meanwhile, the branched propylene-based polymer of the present invention having a relatively small MFR and the branched propylene-based polymer of the present invention having a relatively large MFR, have their own preferred applications. For example, in the case of molding the branched propylene-based polymer of the present invention in a sheet form, it is easier to mold the polymer thickly as the MFR decreases, and it is easier to mold the polymer thinly as the MFR increases. Accordingly, the MFR of the branched propylene-based polymer of the present invention is preferably adjusted in a range of 1.0 g/10 min or more and 10.0 g/10 min or less, depending on the application. For example, the branched propylene-based polymer of the present invention having a MFR of 1.0 g/10 min or more and less than 4.5 g/10 min is preferred in the case of molding the polymer in a relatively thick form (e.g., sheet molding, blow molding, heat molding, foam molding). The branched propylene-based polymer of the present invention having a MFR of 4.5 g/10 min or more and 10.0 g/10 min or less is preferred in the case of molding the polymer in a relatively thin form (e.g., film molding, laminate molding). Regardless of the MFR in either of the above ranges, the branched propylene-based polymer of the present invention shows excellent ductility relative to fluidity.

The method for measuring the MFR is as described above under "Property (3)".

Property (8):

The amount of the branches in the branched propylene-based polymer of the present invention can be measured by $^{13}$C-NMR as the average value of the entire polymer. The relative general value of the branching degree at each absolute molecular weight can be conceived as an index by use of 3D-GPC, from the relation between the absolute molecular weight ($M_{abs}$) and the branching index (g').

In the branched propylene-based polymer of the present invention, the ratio of the component having a molecular weight M of $100\times10^4$ or more ($W100\times10^4$) in the molecular weight distribution curve measured by GPC, is preferably 0.070 or more and 0.100 or less, more preferably 0.070 or more and 0.095 or less, and still more preferably 0.080 or more and 0.095 or less, with respect to the total amount of the polymer. $W100\times10^4$ is the index of the ratio of the high-molecular-weight component contained in the polymer. $W100\times10^4$ is defined as a value obtained by, in an integral molecular weight distribution curve measured by GPC (the whole amount is normalized to 1 on mass basis), subtracting the integral value until a molecular weight M of $100\times10^4$ (log(M) = 6.0) or less from 1.

In the branched propylene-based polymer of the present invention, the branching index g' ($100\times10^4$), which is the branching index at an absolute molecular weight $M_{abs}$ of $100\times10^4$ measured by 3D-GPC, is preferably 0.80 or more and 0.90 or less.

The branching index g' is given by the ratio ($[\eta]_{br}/[\eta]_{lin}$) of the intrinsic viscosity $[\eta]_{br}$ of the polymer having a long-chain branched structure to the intrinsic viscosity $[\eta]_{lin}$ of a linear polymer having the same molecular weight. When the long-chain branched structure exists, the branching index g' is a value smaller than 1.0.

The definition of the branching index g' is described in, for example, "Developments in Polymer Characterization-4" (J. V. Dawkins ed. Applied Science Publishers, 1983), and the branching index g' is an index heretofore known to those skilled in the art.

The branching index g' can be obtained as the function of an absolute molecular weight $M_{abs}$ by use of a 3D-GPC described below, which is a device equipped with a light scatterometer and a viscometer.

In the present invention, the 3D-GPC is a GPC device to which three detectors are connected. The three detectors are a refractive index detector (RI), a viscometer, and a multi-angle laser light scattering detector (MALLS).

As a GPC device equipped with a refractive index detector (RI) and a viscometer, ALLIANCE GPCV2000 (manufactured by Waters Corporation) is used. As a light scattering detector, DAWN-E (a multi-angle laser light scattering detector (MALLS) manufactured by Wyatt Technology) is used.

The detectors are connected in the order of the MALLS, the RI and the viscometer.

As a mobile phase solvent, 1,2,4-trichlorobenzene is used, to which antioxidant IRGANOX 1076 (manufactured by BASF Japan) is added at a concentration of 0.5 mg/mL.

The flow rate is set to 1 mL/min. Two GMHHR-H(S) HT columns (manufactured by Tosoh Corporation) are connected in series and used.

The temperature of the columns, the temperature of a sample injector and the temperature of the detectors are 140°C.

The concentration of the sample is set to 1 mg/mL, and the injection volume (the volume of a sample loop) is 0.2175 mL.

To obtain the absolute molecular weight ($M_{abs}$) and rootmean-square radius of gyration (Rg) obtained from the MALLS and the intrinsic viscosity ([η]) obtained from the viscometer, calculation is carried out by reference to the following references, using ASTRA version 4.73.04 (data processing software included in the MALLS).

References:

1. Developments in Polymer Characterization, Vol. 4. Essex: Applied Science; 1984. Chapter 1.
2. Polymer, 45, 6495-6505 (2004)
3. Macromolecules, 33, 2424-2436 (2000)
4. Macromolecules, 33, 6945-6952 (2000)

The branching index g' is calculated as the ratio ($[\eta]_{br}/[\eta]_{lin}$) of the intrinsic viscosity ($[\eta]_{br}$) obtained by measuring the sample by the viscometer to the intrinsic viscosity ($[\eta]_{lin}$) separately obtained by measuring the linear polymer.

When the long-chain branched structure is introduced in the polymer molecule, the radius of gyration decreases compared to the linear polymer molecule having the same molecular weight. As the radius of gyration decreases, the intrinsic viscosity also decreases. Accordingly, as the long-chain branched structure is introduced, the ratio ($[\eta]_{br}/[\eta]_{lin}$) of the intrinsic viscosity ($[\eta]_{br}$) of the branched polymer to the intrinsic viscosity ($[\eta]_{lin}$) of the linear polymer having the same molecular weight decreases. Accordingly, the branching index g' ($[\eta]_{br}/[\eta]_{lin}$) of the polymer having the long-chain branched structure is a value less than 1.0, and the branching index g' of the linear polymer is 1.0 by definition.

As the linear polymer, a commercially-available homopolypropylene (NOVATEC-PP (registered trademark) manufactured by Japan Polypropylene Corporation, grade FY6) is used to obtain $[\eta]_{lin}$. The fact that the log of the linear polymer $[\eta]_{lin}$ has a linear relationship with the log of the molecular weight, is known as the Mark-Houwink-Sakurada equation. Accordingly, the value of $[\eta]_{lin}$ can be obtained by appropriate extrapolation into the low-molecular-weight side or the high-molecular-weight side.

A branching index g' of smaller than 1.0 can be achieved by introducing many long-chain branches. In the case of the same number of branches, it can be achieved by increasing the branched chain length. Both of them are possible by carrying out the polymerization while controlling the selection of the catalysts, the combination thereof, the ratio of their amounts, and the preliminary polymerization conditions.

Each branching index g' can be controlled within the above-described range by, as described below, appropriately adjusting the amount of hydrogen during polymerization, in addition to the selection of the catalysts, the combination thereof, and the ratio of their amounts.

Property (9):

The melting point (Tm) of the branched propylene-based polymer measured by differential scanning calorimetry (DSC) is preferably 150°C or more and 157°C or less.

As the Tm of the branched propylene-based polymer increases, the heat resistance and rigidity thereof increase. Accordingly, the Tm is preferably 150°C or more, and more preferably 151°C or more.

On the other hand, as the Tm of the branched propylene-based polymer is too high, excessively high rigidity and, as a result, poor texture (e.g., unpleasant touch) may be obtained. Accordingly, the Tm is preferably 157°C or less, and more preferably 155°C or less.

In the case of polypropylene, the Tm is decreased by the insertion of ethylene units or regioregularity failures. The

Tm of the branched propylene-based polymer of the present invention can be controlled by selecting complexes appropriate for the regioregularity failures as the polymerization catalyst, selecting the combination of the several complexes, and controlling the polymerization temperature or polymerization pressure.

The melting point (Tm) of the branched propylene-based polymer can be measured by the following method. Using DSC6200 (manufactured by Seiko Instruments, Inc.), a sheet-shaped sample (5 mg) is put in an aluminum pan; the temperature of the sample is increased from room temperature to 200°C at a temperature increase rate of 100°C/min; the sample is kept at the temperature for 5 minutes; the sample temperature is decreased to 20°C at a temperature decrease rate of 10°C/min for crystallization; the crystallization maximum peak temperature (°C) at the time of the crystallization is obtained as a crystallization temperature (Tc); and then the melting point (Tm) is obtained as the melting maximum peak temperature (°C) at the time of increasing the sample temperature to 200°C at a temperature increase rate of 10°C/min.

The sheet-shaped sample can be obtained as follows. The branched propylene-based polymer, which is in a powder form in this step, is sandwiched between pressing plates. The sandwiched branched propylene-based polymer powder is pre-heated at 190°C for two minutes, pressed at 5 MPa for two minutes, and then cooled down at 0°C and 10 MPa for two minutes, thereby obtaining the sheet-shaped sample.

Property (10):

The branched propylene-based polymer of the present invention may comprise the long-chain branched structure moiety represented by the following structural formula (A):

[Chem. 1]

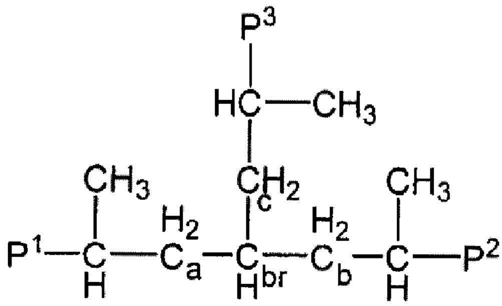

Structural Formula (A)

(where each of $P_1$, $P_2$ and $P_3$ is a residue formed at an end of the branched propylene-based polymer; each of $P_1$, $P_2$ and $P_3$ has one or more propylene units; Cbr represents a methine carbon at a base of a branched chain which contains 7 or more carbon atoms; and each of Ca, Cb and Cc represents a methylene carbon adjacent to the methine carbon (Cbr).)

In the structural formula (A), there are three types of the main chain of the branched propylene-based polymer: the $P^1$-Cbr-$P^2$ line, the $P^1$-Cbr-$P^3$ line and the $P^2$-Cbr-$P^3$ line. Accordingly, corresponding to them, the Cbr-$P^3$ line, the Cbr-$P^2$ line or the Cbr-$P^1$ line can be the branched chain. In some cases, each of $P_1$, $P_2$ and $P^3$ contains, in itself, a different branching carbon (Cbr) from the Cbr shown in the structural formula (A).

As for the assignment of the LCB structure, by $^{13}$C-NMR of the branched propylene-based polymer, three methylene carbons (Ca, Cb and Cc) are observed from 44.0 ppm to 44.1 ppm, from 44.7 ppm to 44.8 ppm, and from 44.8 ppm to 44.9 ppm, and a methine carbon (Cbr) is observed from 31.6 ppm to 31. 8 ppm. It is characterized in that the three methylene carbons adjacent to the Cbr are observed as three separate peaks which are diastereotopically and non-equivalently separated.

The LCB number is the number of branched chains which contains 7 or more carbon atoms per 1000 monomer units (1000 P) calculated by $^{13}$C-NMR, and the LCB number is also the number of the methine carbons, each of which is located at each of the bases of the branched chains which contains 7 or more carbon atoms.

A branched chain which contains 7 or more carbon atoms can be differentiated from a branched chain which contains less than 7 carbon atoms, since they are different in the peak position of the methine carbon at the base of the branch (Macromolecules, Vol. 35, No. 10, 2002).

In the present invention, the LCB number of the branched propylene-based polymer is not particularly limited, and it is preferably 1.0 or less per 1000 P.

By propylene polymerization in the same condition as the production of the branched propylene-based polymer of the present invention, the macromer corresponding to the branch part can be synthesized, and the LCB number of the

macromer measured by the above-described method, can be estimated as the LCB number of the branch part. For the branched chain of the branched propylene-based polymer of the present invention, the lower limit of the LCB number measured as described above, is preferably 0.1 or more, more preferably 0.2 or more, and still more preferably 0.3 or more per 1000 P. On the other hand, the upper limit of the LCB number of the branched chains is not particularly limited, and it is generally 1.0 or less.

Details of the method for measuring the long-chain branched (LCB) structure, which is calculated by $^{13}C$-NMR, are as follows.

[Sample preparation]

First, about 200 mg of a sample, 2.4 mL of a solvent (o-dichlorobenzene/deuterated benzene bromide ($C_6D_5Br$) in a volume ratio of 2/1) and hexamethyldisiloxane, which is a chemical shift standard, are put in an NMR sample tube (inner diameter 10 mm); the tube is subjected to nitrogen substitution and then sealed; and the substances in the tube are dissolved by heating to obtain a homogeneous solution.

[Devices and measurement method]

In NMR measurement, an NMR device (AVANCE 400, manufactured by: Bruker BioSpin K.K.) equipped with a cryoprobe (diameter 10 mm) is used.

$^{13}C$-NMR measurement is carried out in the following condition.
Probe temperature: 120°C
Pulse angle: 45°
Pulse interval: 4.2 seconds
Accumulation times: 20000 or more
Method: Proton broadband decoupling method

As the chemical shift, the $^{13}C$ signal of hexamethyldisiloxane is set to 1.98 ppm, and this is used as a chemical shift standard for the chemical shift of another $^{13}C$ signal.

[Method for calculating the number of the long-chain branches (the LCB number)]

The average of the methylene carbon intensity of 44.0 ppm to 44.1 ppm and the methine carbon (Cbr) intensity of 31.6 ppm to 31.8 ppm, where the methylene carbon intensity of the propylene main chain of 44.4 ppm to 49.0 ppm is normalized to 1000, is determined as the number of the long-chain branches per 1000 propylene monomer units.

Property (11):

To obtain the propylene-based polymer that is excellent in ductility while retaining melt tension necessary for molding, the lower limit of the melt tension at 230°C (MT230°C) of the branched propylene-based polymer of the present invention, is preferably 3.5 g or more, more preferably 4.0 g or more, still more preferably 5.0 g or more, even more preferably 6.0 g or more, and particularly preferably 8.0 g or more, and the upper limit of MT230°C is preferably 19.0 g or less, more preferably 18.0 g or less, and particularly preferably 17.0 g or less. When the melt tension (MT230°C) is within the above range, the branched propylene-based polymer of the present invention can be easily molded by adjusting the molding condition. The method for measuring the melt tension (MT230°C) is as described above under "Property (4)".

Property (12):

The branched propylene-based polymer of the present invention is excellent in melt-ductility while retaining high melt tension, since it has the controlled branched structure (the amount, length and distribution of the branches).

The melt-ductility can be evaluated using the maximum drawing rate (MaxDraw) as an index. Higher MaxDraw means better ductility.

For the branched propylene-based polymer of the present invention, the maximum drawing rate (MaxDraw) at 230°C is preferably 90 m/min or more, more preferably 100 m/min or more, and still more preferably 110 m/min or more. The method for measuring the maximum drawing rate (MaxDraw) is as described above under "Property (3)".

II. Method for producing the branched propylene-based polymer

The method for producing the branched propylene-based polymer of the present invention is not particularly limited, as long as it is a method by which a branched propylene-based polymer fulfilling the above-described physical properties is obtained. For example, the branched propylene-based polymer of the present invention is produced by a macromer copolymerization method using a metallocene catalyst.

As the method for producing the branched propylene-based polymer of the present invention by the macromonomer copolymerization method using the metallocene catalyst, examples include, but are not limited to, the first production method in which the macromer synthesis process and the propylene and macromer copolymerization process are implemented at the same time using a catalyst containing several metallocene compounds which gives a long-chain, branched propylene-based polymer, and the second production method in which the macromer synthesis process and the propylene and macromer copolymerization process are separately implemented in two steps.

II-1. The first production method

The first production method is preferably a method for obtaining the branched propylene-based polymer of the present invention by homopolymerizing propylene or copolymerizing propylene with at least one kind of comonomer selected from α-olefins which contains 2 to 20 carbon atoms (other than propylene) using an olefin polymerization catalyst containing the following catalyst components (A), (B) and (C):

(A): two or more kinds of transition metal compounds of Group 4 of the periodic table, which include at least one kind of catalyst component [A-1] (a compound represented by the following general formula (a1)) and at least one kind of catalyst component [A-2] (a compound represented by the following general formula (a2)),

catalyst component [A-1]: a compound represented by the general formula (a1),
catalyst component [A-2]: a compound represented by the general formula (a2),

(B): a compound or ion-exchange layered silicate which is reactive with the catalyst component (A) to form an ion pair, and
(C): an organoaluminum compound.

Hereinafter, the catalyst components (A), (B) and (C) are described in detail.

1. Catalyst component (A)

1-1. Catalyst component [A-1]: compound represented by the general formula (a1)

As the catalyst component [A-1], a metallocene compound represented by the following general formula (a1) is preferably used, from the viewpoint of producing macromers having a number average molecular weight (Mn) of 30,000 or less and a high terminal vinyl rate.

[Chem. 2]

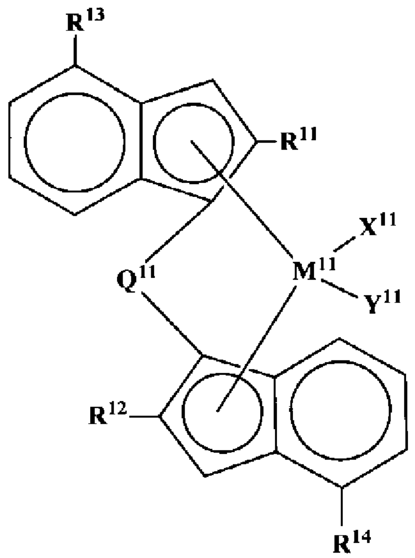

General Formula (a1)

(where $R^{11}$ and $R^{12}$ each independently represents a thienyl group which contains no substituent or which contains a substituent at the 5-position; $R^{13}$ and $R^{14}$ each independently represents an aryl group which contains 6 to 30 carbon atoms, which contains no substituent or a substituent, and which optionally contains one or more heteroatoms selected from halogen, silicon, oxygen, sulfur, nitrogen, boron and phosphorus; $Q^{11}$ represents a divalent hydrocarbon group which contains 1 to 20 carbon atoms, or a silylene or germylene group which optionally contains a hydrocarbon group containing 1 to 20 carbon atoms; $M^{11}$ represents zirconium or hafnium; $X^{11}$ and $Y^{11}$ each independently represents a hydrogen atom, a halogen atom, a hydrocarbon group which contains 1 to 20 carbon atoms, a silyl group which contains a hydrocarbon group containing 1 to 20 carbon atoms, a halogenated hydrocarbon group which contains 1 to 20 carbon atoms, an amino group, or an alkylamino group which contains 1 to 20 carbon atoms.)

By using the metallocene compound represented by the general formula (a1), a coordination site on the heterocycle and the transition metal ($M^{11}$), and the relative positional relationship with a growing polymer chain are likely to be appropriate. Accordingly, a macromer having a high terminal vinyl rate and a small molecular weight is easily obtained. In the metallocene compound represented by the general formula (a1), $R^{13}$ and $R^{14}$ are preferably bulky groups compared to $R^{11}$ and $R^{12}$.

As described above, $R^{11}$ and $R^{12}$ each independently represents a thienyl group which contains no substituent or which contains a substituent at the 5-position. The thienyl group which contains a substituent at the 5-position is a thienyl group which contains a substituent at the 5-position only. From the point of view that the molecular weight and terminal vinyl rate of the macromer can be easily controlled within the preferred ranges, it is preferable that $R^{11}$ and $R^{12}$ each independently represents a 2-thienyl group which contains no substituent or which contains a substituent at the 5-position, and it is more preferable that $R^{11}$ and $R^{12}$ each independently represents a **2**-thienyl group which contains a substituent at the 5-position.

As the substituent that may be contained in the thienyl group as $R^{11}$ and $R^{12}$, examples include, but are not limited to, an alkyl group which contains 1 to 6 carbon atoms such as a methyl group, an ethyl group, an n-propyl group, an i-propyl group, an n-butyl group, an i-butyl group and a t-butyl group, an aryl group which contains 6 to 12 carbon atoms, such as a phenyl group, a halogen atom such as a fluorine atom and a chlorine atom, an alkoxy group which contains 1 to 6 carbon atoms, such as a methoxy group and an ethoxy group, and a silyl group which contains a hydrocarbon group containing 1 to 6 carbon atoms, such as a trimethylsilyl group and a triethylsilyl group. Of them, an alkyl group which contains 1 to 4 carbon atoms is preferred; an alkyl group which contains 1 to 3 carbon atoms is more preferred; and a methyl group is still more preferred.

$R^{11}$ and $R^{12}$ are preferably the same groups.

$R^{13}$ and $R^{14}$ each independently represents an aryl group which contains 6 to 30 carbon atoms, which contains no substituent or a substituent, and which optionally contains one or more heteroatoms selected from halogen, silicon, oxygen, sulfur, nitrogen, boron and phosphorus. As the aryl group, examples include, but are not limited to, a phenyl group, a biphenylyl group and a naphthyl group. Of them, a phenyl group is preferred.

By making $R^{13}$ and $R^{14}$ bulkier appropriately, a macromer having higher stereoregularity, less heterologous bonds, a high terminal vinyl rate and a small molecular weight, is obtained.

Accordingly, each of $R^{13}$ and $R^{14}$ is preferably a phenyl group which contains a substituent so that the number of the carbon atoms ranges from 6 to 16, or an unsubstituted biphenylyl or naphthyl group. In particular, each of $R^{13}$ and $R^{14}$ is preferably a phenyl group which contains at least one substituent selected from the following group so that the number of

the carbon atoms ranges from 6 to 16: the group consisting of a hydrocarbon group which contains 1 to 6 carbon atoms, a silyl group which contains a hydrocarbon group containing 1 to 6 carbon atoms, a halogen-containing hydrocarbon group which contains 1 to 6 carbon atoms, and a halogen atom, or each of $R^{13}$ and $R^{14}$ is preferably a biphenylyl or naphthyl group which contains no substituent, and more preferably the phenyl group which contains the substituent.

When the thienyl group of $R^{11}$ or $R^{12}$ contains a substituent, in particular, each of $R^{13}$ and $R^{14}$ is preferably a phenyl group which contains at least one substituent selected from the following group so that the number of the carbon atoms ranges from 6 to 16: the group consisting of a hydrocarbon group which contains 2 to 6 carbon atoms, a silyl group which contains a hydrocarbon group containing 1 to 6 carbon atoms, a halogen-containing hydrocarbon group which contains 1 to 6 carbon atoms, and a halogen atom, or each of $R^{13}$ and $R^{14}$ is preferably a biphenylyl or naphthyl group which contains no substituent, and more preferably the phenyl group which contains the substituent.

When $R^{11}$ or $R^{12}$ is a thienyl group which contains a substituent and $R^{13}$ or $R^{14}$ is an aryl group which contains a substituent, it is preferable that the substituent of the aryl group of $R^{13}$ or $R^{14}$ is a bulky group compared to the substituent of the thienyl group of $R^{11}$ or $R^{12}$. It is preferable that the smallest total number of the carbon atoms and heteroatoms of a substituent(s) of the aryl group of $R^{13}$ or $R^{14}$, is larger than the largest total number of the carbon atoms and heteroatoms of a substituent(s) of the thienyl group of $R^{11}$ or $R^{12}$.

As preferred $R^{13}$ and $R^{14}$, examples include, but are not limited to, a 4-isopropylphenyl group, a 4-t-butylphenyl group, a 2,3-dimethylphenyl group, a 3,5-di-t-butylphenyl group, a 4-chlorophenyl group, a 4-trimethylsilylphenyl group, a 4-biphenylyl group, a 1-naphthyl group and a 2-naphthyl group. Of them, a phenyl group which contains a substituent at the 4-position only is preferred; a phenyl group substituted with an alkyl group which contains 3 or 4 carbon atoms, is more preferred; and a 4-isopropylphenyl group or a 4-t-butylphenyl group is still more preferred.

Also, $R^{13}$ and $R^{14}$ are preferably the same groups.

A preferred combination of $R^{11}$, $R^{12}$, $R^{13}$ and $R^{14}$ is the following combination, for example: the total number of the carbon atoms and heteroatoms of the substituent of the aryl group of each of $R^{13}$ and $R^{14}$, is 1 to 5 larger, and more preferably 2 to 3 larger, than the total number of the carbon atoms and heteroatoms of the substituent of the thienyl group of each of $R^{11}$ and $R^{12}$.

As such preferred combinations, examples include, but are not limited to, the following combinations: a combination in which each of $R^{11}$ and $R^{12}$ is a 5-methyl-2-thienyl group and each of $R^{13}$ and $R^{14}$ is a 4-isopropylphenyl group, a 4-t-butylphenyl group or a 4-trimethylsilylphenyl group, and a combination in which each of $R^{11}$ and $R^{12}$ is a 5-isopropyl-2-thienyl group and each of $R^{13}$ and $R^{14}$ is a 4-t-butylphenyl group or a 4-trimethylsilylphenyl group.

$Q^{11}$ represents a divalent hydrocarbon group which contains 1 to 20 carbon atoms and which bonds the two five-membered rings, or a silylene or germylene group which optionally contains a hydrocarbon group containing 1 to 20 carbon atoms and which bonds the two five-membered rings. When there are two hydrocarbon groups on the silylene or germylene group, they may be bound to form a cyclic structure.

As $Q^{11}$, examples include, but are not limited to, the following: an alkylene group such as methylene, methylmethylene, dimethylmethylene and 1,2-ethylene; an arylalkylene group such as diphenylmethylene; a silylene group; an alkylsilylene group such as methylsilylene, dimethylsilylene, diethylsilylene, di(n-propyl)silylene, di(i-propyl) silylene and di(cyclohexyl)silylene; an (alkyl) (aryl)silylene group such as methyl(phenyl)silylene; an arylsilylene group such as diphenylsilylene; an alkyloligosilylene group such as tetramethyldisilylene; a germylene group; and an alkylgermylene group, an (alkyl) (aryl)germylene group and an arylgermylene group, each of which is obtained by substituting germanium for silicon in the above silylene group which contains a divalent hydrocarbon group containing 1 to 20 carbon atoms.

Of them, a silylene group which contains a hydrocarbon group containing 1 to 20 carbon atoms or a germylene group which contains a hydrocarbon group containing 1 to 20 carbon atoms is preferred, and an alkylsilylene group or an alkylgermylene group is particularly preferred.

$M^{11}$ is zirconium or hafnium, and it is preferably hafnium.

Each of $X^{11}$ and $Y^{11}$ is an ancillary ligand and reacts with the catalyst component (B) to produce active metallocene having an olefin polymerization ability. Accordingly, the ligand type of $X^{11}$ and $Y^{11}$ is not particularly limited, as long as this object is achieved. $X^{11}$ and $Y^{11}$ each independently represents a hydrogen atom, a halogen atom, a hydrocarbon group which contains 1 to 20 carbon atoms, a silyl group which contains a hydrocarbon group containing 1 to 20 carbon atoms, a halogenated hydrocarbon group which contains 1 to 20 carbon atoms, an amino group, or an alkylamino group which contains 1 to 20 carbon atoms.

Of the compounds represented by the general formula (a1), preferred compounds are as follows, for example:

(1) dichloro[1,1'-dimethylsilylene bis{2-(5-methyl-2-thienyl)-4-phenyl-indenyl}]hafnium,
(2) dichloro[1,1'-diphenylsilylene bis{2-(5-methyl-2-thienyl)-4-phenyl-indenyl}]hafnium,
(3) dichloro[1,1'-dimethylsilylene bis{2-(5-t-butyl-2-thienyl)-4-phenyl-indenyl}]hafnium,
(4) dichloro[1,1'-dimethylsilylene bis{2-(5-trimethylsilyl-2-thienyl)-4-phenyl-indenyl}]hafnium,
(5) dichloro[1,1'-dimethylsilylene bis{2-(5-phenyl-2-thienyl)-4-phenyl-indenyl}]hafnium,

(6) dichloro[1,1'-dimethylsilylene bis{2-(5-methyl-2-thienyl)-4-(4-chlorophenyl)-indenyl}]hafnium,
(7) dichloro[1,1'-dimethylsilylene bis{2-(5-methyl-2-thienyl)-4-(4-isopropylphenyl)-indenyl}]hafnium,
(8) dichloro[1,1'-dimethylsilylene bis{2-(5-methyl-2-thienyl)-4-(4-t-butylphenyl)-indenyl}]hafnium,
(9) dichloro[1,1'-dimethylsilylene bis{2-(5-methyl-2-thienyl)-4-(4-trimethylsilylphenyl)-indenyl}]hafnium,
(10) dichloro[1,1'-dimethylsilylene bis{2-(5-methyl-2-thienyl)-4-(4-biphenylyl)-indenyl}]hafnium,
(11) dichloro[1,1'-dimethylsilylene bis{2-(5-methyl-2-thienyl)-4-(1-naphthyl)-indenyl}]hafnium,
(12) dichloro[1,1'-dimethylsilylene bis{2-(5-methyl-2-thienyl)-4-(2-naphthyl)-indenyl}]hafnium,
(13) dichloro[1,1'-dimethylsilylene bis{2-(5-t-butyl-2-thienyl)-4-(1-naphthyl)-indenyl}]hafnium,
(14) dichloro[1,1'-dimethylsilylene bis{2-(5-t-butyl-2-thienyl)-4-(2-naphthyl)-indenyl}]hafnium,
(15) dichloro[1,1'-dimethylsilylene bis{2-(5-t-butyl-2-thienyl)-4-(4-isopropylphenyl)-indenyl}]hafnium,
(16) dichloro[1,1'-dimethylsilylene bis{2-(5-t-butyl-2-thienyl)-4-(4-t-butylphenyl)-indenyl}]hafnium,
(17) dichloro[1,1'-dimethylsilylene bis{2-(5-t-butyl-2-thienyl)-4-(4-trimethylsilylphenyl)-indenyl}]hafnium,
(18) dichloro[1,1'-dimethylsilylene bis{2-(5-isopropyl-2-thienyl)-4-(4-t-butylphenyl)-indenyl}]hafnium, and
(19) dichloro[1,1'-dimethylsilylene bis{2-(5-isopropyl-2-thienyl)-4-(4-trimethylsilylphenyl)-indenyl}]hafnium.

Of them, more preferred are the following compounds:

(7) dichloro[1,1'-dimethylsilylene bis{2-(5-methyl-2-thienyl)-4-(4-isopropylphenyl)-indenyl}]hafnium,
(8) dichloro[1,1'-dimethylsilylene bis{2-(5-methyl-2-thienyl)-4-(4-t-butylphenyl)-indenyl}]hafnium,
(9) dichloro[1,1'-dimethylsilylene bis{2-(5-methyl-2-thienyl)-4-(4-trimethylsilylphenyl)-indenyl}]hafnium,
(18) dichloro[1,1'-dimethylsilylene bis{2-(5-isopropyl-2-thienyl)-4-(4-t-butylphenyl)-indenyl}]hafnium, and
(19) dichloro[1,1'-dimethylsilylene bis{2-(5-isopropyl-2-thienyl)-4-(4-trimethylsilylphenyl)-indenyl}]hafnium.

Of them, particularly preferred are the following compounds:

(7) dichloro[1,1'-dimethylsilylene bis{2-(5-methyl-2-thienyl)-4-(4-isopropylphenyl)-indenyl}]hafnium,
(8) dichloro[1,1'-dimethylsilylene bis{2-(5-methyl-2-thienyl)-4-(4-t-butylphenyl)-indenyl}]hafnium, and
(9) dichloro[1,1'-dimethylsilylene bis{2-(5-methyl-2-thienyl)-4-(4-trimethylsilylphenyl)-indenyl}]hafnium.

1-2. Catalyst component [A-2]

As the catalyst component [A-2], a metallocene compound represented by the following general formula (a2) is preferably used, from the viewpoint of efficiently copolymerizing a macromer and propylene:

[Chem. 3]

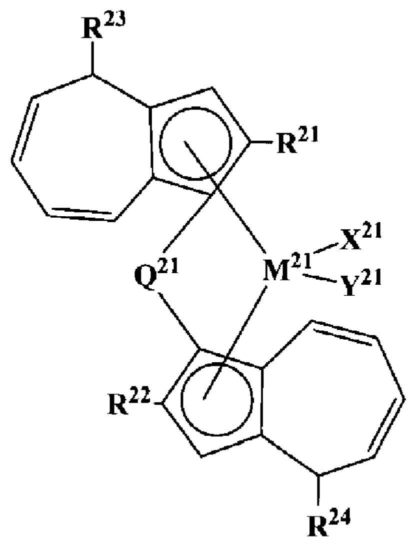

General Formula (a2)

(where $R^{21}$ and $R^{22}$ each independently represents a hydrocarbon group which contains 1 to 6 carbon atoms; $R^{23}$ and $R^{24}$ each independently represents an aryl group which contains no substituent or a substituent, which contains 6 to 30 carbon atoms, and which optionally contains one or more heteroatoms selected from halogen, silicon, oxygen, sulfur, nitrogen, boron and phosphorus; $Q^{21}$ represents a divalent hydrocarbon group which contains 1 to 20 carbon atoms, or a silylene or

germylene group which optionally contains a hydrocarbon group containing 1 to 20 carbon atoms; $M^{21}$ represents zirconium or hafnium; and $X^{21}$ and $Y^{21}$ each independently represents a hydrogen atom, a halogen atom, a hydrocarbon group which contains 1 to 20 carbon atoms, a silyl group which contains a hydrocarbon group containing 1 to 20 carbon atoms, a halogenated hydrocarbon group which contains 1 to 20 carbon atoms, an amino group, or an alkylamino group which contains 1 to 20 carbon atoms.)

$R^{21}$ and $R^{22}$ each independently represents a hydrocarbon group containing 1 to 6 carbon atoms, preferably an alkyl group, and more preferably an alkyl group containing 1 to 4 carbon atoms. As $R^{21}$ and $R^{22}$, examples include, but are not limited to, methyl, ethyl, n-propyl, i-propyl, n-butyl, i-butyl, sec-butyl, n-pentyl, i-pentyl and n-hexyl. Of them, methyl, ethyl and n-propyl are preferred.

$R^{23}$ and $R^{24}$ each independently represents an aryl group which contains 6 to 30 (preferably 6 to 24) carbon atoms, which contains no substituent or a substituent, and which optionally contains one or more heteroatoms selected from halogen, silicon, oxygen, sulfur, nitrogen, boron and phosphorus. As such an aryl group, examples include, but are not limited to, a phenyl group, a biphenylyl group and a naphthyl group, each of which optionally contains a substituent. Preferred examples include, but are not limited to, phenyl, 3-chlorophenyl, 4-chlorophenyl, 3-fluorophenyl, 4-fluorophenyl, 4-methylphenyl, 4-i-propylphenyl, 4-t-butylphenyl, 4-trimethylsilylphenyl, 4-(2-fluoro-4-biphenylyl), 4-(2-chloro-4-biphenylyl), 1-naphthyl, 2-naphthyl, 4-chloro-2-naphthyl, 3-methyl-4-trimethylsilylphenyl, 3,5-dimethyl-4-t-butylphenyl, 3,5-dimethyl-4-trimethylsilylphenyl, and 3,5-dichloro-4-trimethylsilylphenyl.

$Q^{21}$ represents a divalent hydrocarbon group which contains 1 to 20 carbon atoms and which bonds the two five-membered rings, or a silylene or germylene group which optionally contains a hydrocarbon group containing 1 to 20 carbon atoms and which bonds the two five-membered rings. When there are two hydrocarbon groups on the silylene or germylene group, they may be bound to form a cyclic structure.

As $Q^{21}$, examples include, but are not limited to, those mentioned above as the examples of $Q^{11}$ in the general formula (a1). As $Q^{21}$, a silylene group which contains a hydrocarbon group containing 1 to 20 carbon atoms or a germylene group which contains a hydrocarbon group containing 1 to 20 carbon atoms is preferred, and an alkylsilylene group or an alkylgermylene group is particularly preferred.

$M^{21}$ is zirconium or hafnium, and it is preferably hafnium.

Each of $X^{21}$ and $Y^{21}$ is an ancillary ligand and reacts with the catalyst component (B), which serves as a co-catalyst, to produce active metallocene having an olefin polymerization ability. Accordingly, the ligand type of $X^{21}$ and $Y^{21}$ is not particularly limited, as long as this object is achieved. $X^{21}$ and $Y^{21}$ each independently represents a hydrogen atom, a halogen atom, a hydrocarbon group which contains 1 to 20 carbon atoms, a silyl group which contains a hydrocarbon group containing 1 to 20 carbon atoms, a halogenated hydrocarbon group which contains 1 to 20 carbon atoms, an amino group, or an alkylamino group which contains 1 to 20 carbon atoms.

As the metallocene compound represented by the general formula (a2), examples include, but are not limited to, the following.

For the sake of simplicity, the following examples only show typical compound examples, in each of which the central metal is hafnium. However, it is obvious that similar zirconium compounds are also applicable as the metallocene compound, and any kind of ligand, crosslinking group or ancillary ligand is also applicable as the metallocene compound.

(1) Dichloro{1,1'-dimethylsilylene bis(2-methyl-4-phenyl-4-hydroazulenyl) }hafnium
(2) Dichloro[1,1'-dimethylsilylene bis{2-methyl-4-(4-chlorophenyl)-4-hydroazulenyl}]hafnium
(3) Dichloro[1,1'-dimethylsilylene bis{2-methyl-4-(4-t-butylphenyl)-4-hydroazulenyl}]hafnium
(4) Dichloro[1,1'-dimethylsilylene bis{2-methyl-4-(4-trimethylsilylphenyl)-4-hydroazulenyl}]hafnium
(5) Dichloro[1,1'-dimethylsilylene bis{2-methyl-4-(3-chloro-4-t-butylphenyl)-4-hydroazulenyl}]hafnium
(6) Dichloro[1,1'-dimethylsilylene bis{2-methyl-4-(3-methyl-4-t-butylphenyl)-4-hydroazulenyl}]hafnium
(7) Dichloro[1,1'-dimethylsilylene bis{2-methyl-4-(3-chloro-4-trimethylsilylphenyl)-4-hydroazulenyl}]hafnium
(8) Dichloro[1,1'-dimethylsilylene bis{2-methyl-4-(3-methyl-4-trimethylsilylphenyl)-4-hydroazulenyl}]hafnium
(9) Dichloro[1,1'-dimethylsilylene bis{2-methyl-4-(1-naphthyl)-4-hydroazulenyl} ]hafnium
(10) Dichloro[1,1'-dimethylsilylene bis{2-methyl-4-(2-naphthyl)-4-hydroazulenyl}]hafnium
(11) Dichloro[1,1'-dimethylsilylene bis{2-methyl-4-(4-chloro-2-naphthyl)-4-hydroazulenyl}]hafnium
(12) Dichloro[1,1'-dimethylsilylene bis{2-methyl-4-(2-fluoro-4-biphenylyl)-4-hydroazulenyl}]hafnium
(13) Dichloro[1,1'-dimethylsilylene bis{2-methyl-4-(2-chloro-4-biphenylyl)-4-hydroazulenyl}]hafnium
(14) Dichloro[1,1'-dimethylsilylene bis{2-methyl-4-(9-phenanthryl)-4-hydroazulenyl}]hafnium
(15) Dichloro[1,1'-dimethylsilylene bis{2-ethyl-4-(4-chlorophenyl)-4-hydroazulenyl}]hafnium
(16) Dichloro[1,1'-dimethylsilylene bis{2-n-propyl-4-(3-chloro-4-trimethylsilylphenyl)-4-hydroazulenyl}]hafnium
(17) Dichloro[1,1'-dimethylsilylene bis{2-ethyl-4-(3-chloro-4-t-butylphenyl)-4-hydroazulenyl}]hafnium
(18) Dichloro[1,1'-dimethylsilylene bis{2-ethyl-4-(3-methyl-4-trimethylsilylphenyl)-4-hydroazulenyl}]hafnium
(19) Dichloro[1,1'-dimethylgermylene bis{2-methyl-4-(2-fluoro-4-biphenylyl)-4-hydroazulenyl}]hafnium
(20) Dichloro[1,1'-dimethylgermylene bis{2-methyl-4-(4-t-butylphenyl)-4-hydroazulenyl}]hafnium

(21) Dichloro[1,1'-(9-silafluorene-9,9-diyl)bis{2-ethyl-4-(4-chlorophenyl)-4-hydroazulenyl}]hafnium
(22) Dichloro[1,1'-dimethylsilylene bis{2-ethyl-4-(4-chloro-2-naphthyl)-4-hydroazulenyl}]hafnium
(23) Dichloro[1,1'-dimethylsilylene bis{2-ethyl-4-(2-fluoro-4-biphenylyl)-4-hydroazulenyl}]hafnium
(24) Dichloro[1,1'-(9-silafluorene-9,9-diyl)bis{2-ethyl-4-(3,5-dichloro-4-trimethylsilylphenyl)-4-hydroazulenyl}]hafnium

Of them, preferred are the following compounds.

(2) Dichloro[1,1'-dimethylsilylene bis{2-methyl-4-(4-chlorophenyl)-4-hydroazulenyl}]hafnium
(7) Dichloro[1,1'-dimethylsilylene bis{2-methyl-4-(3-chloro-4-trimethylsilylphenyl)-4-hydroazulenyl}]hafnium
(18) Dichloro[1,1'-dimethylsilylene bis{2-ethyl-4-(3-methyl-4-trimethylsilylphenyl)-4-hydroazulenyl}]hafnium
(22) Dichloro[1,1'-dimethylsilylene bis{2-ethyl-4-(4-chloro-2-naphthyl)-4-hydroazulenyl}]hafnium
(23) Dichloro[1,1'-dimethylsilylene bis{2-ethyl-4-(2-fluoro-4-biphenylyl)-4-hydroazulenyl}]hafnium
(24) Dichloro[1,1'-(9-silafluorene-9,9-diyl)bis{2-ethyl-4-(3,5-dichloro-4-trimethylsilylphenyl)-4-hydroazulenyl}]hafnium

Of them, still more preferred are the following compounds.

(2) Dichloro[1,1'-dimethylsilylene bis{2-methyl-4-(4-chlorophenyl)-4-hydroazulenyl}]hafnium
(18) Dichloro[1,1'-dimethylsilylene bis{2-ethyl-4-(3-methyl-4-trimethylsilylphenyl)-4-hydroazulenyl}]hafnium
(22) Dichloro[1,1'-dimethylsilylene bis{2-ethyl-4-(2-fluoro-4-biphenylyl)-4-hydroazulenyl}]hafnium
(24) Dichloro[1,1'-(9-silafluorene-9,9-diyl)bis{2-ethyl-4-(3,5-dichloro-4-trimethylsilylphenyl)-4-hydroazulenyl}]hafnium

2. Catalyst component (B)

The catalyst component (B) used in the present invention is a compound or ion-exchange layered silicate which is reactive with the catalyst component (A) to form an ion pair.
The catalyst component (B) may be used alone, or two or more kinds of the catalyst components (B) may be used. The catalyst component (B) is preferably an ion-exchange layered silicate.

2-1. Compound which is reactive with the catalyst component (A) to form an ion pair

As the compound which is reactive with the catalyst component (A) to form an ion pair, examples include, but are not limited to, an aluminum oxy compound and a boron compound. As the aluminum oxy compound, examples include, but are not limited to, compounds represented by the following general formulae (I) to (III).

[Chem. 4]

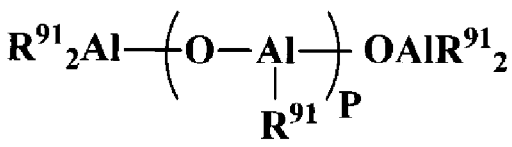

General Formula (I)

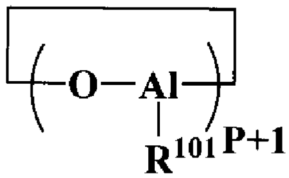

General Formula (II)

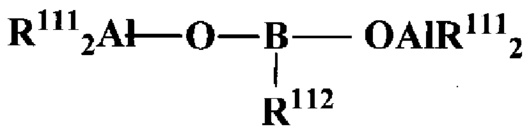

General Formula (III)

In the general formulae (I), (II) and (III), $R^{91}$, $R^{101}$ and $R^{111}$ each independently represents a hydrogen atom or a hydrocarbon group, preferably a hydrocarbon group which contains 1 to 10 carbon atoms, and particularly preferably a hydrocarbon group which contains 1 to 6 carbon atoms. Plurality of $R^{91}$'s may be the same or different; plurality of $R^{101}$'s may be the same or different; and plurality of $R^{111}$'s may be the same or different. Also, p is an integer of from 0 to 40, and preferably an integer of from 2 to 30.

Each of the compounds represented by the general formulae (I) and (II) is a compound called aluminoxane. Among aluminoxanes, methylaluminoxane or methyl isobutyl aluminoxane is preferred. Several kinds of aluminoxanes may be used in each group or between the groups. These aluminoxanes can be prepared in various kinds of known conditions.

In the general formula (III), $R^{112}$ is a hydrocarbon group which contains 1 to 10 (preferably 1 to 6) carbon atoms. The compound represented by the general formula (III) can be obtained by the reaction of one or two or more kinds of trialkylaluminums with an alkyl boronic acid represented by the general formula $R^{112}B(OH)_2$ at a molar ratio of from 10:1 to 1:1.

As the boron compound, examples include, but are not limited to, a complex of a cation (such as carbonium cation and ammonium cation) and an organoboron compound (such as triphenylboron, tris(3,5-difluorophenyl)boron and tris(pentafluorophenyl)boron), and various kinds of organoboron compounds such as tris(pentafluorophenyl)boron.

2-2. Ion-exchange layered silicate

In the present invention, the ion-exchange layered silicate used as a raw material (hereinafter, it may be simply referred to as "silicate") is a silicate compound having the following characteristics: it has a crystal structure such that constituent layers are stacked on each other in parallel by bonding force such as ionic bonding; interlayer ions are present between the layers; and the contained interlayer ions are exchangeable ions.

Most silicate is generally mined as a main component of cray minerals in nature. In general, silicate is refined by use of a difference in precipitation rate or the like when being dispersed and swollen in water. However, complete removal of foreign substances is not needed, and foreign substances other than ion-exchange layered silicate, such as quartz and cristobalite, may be contained in silicate. Such silicate is sometimes more preferred than pure silicate, depending on the type, amount, particle diameter, crystallinity and dispersion state of the foreign substances. The ion-exchange layered silicate as the catalyst component (B) includes such a complex.

Also, the silicate used in the present invention is not limited to a natural product, and it may be an artificially synthesized product.

As the ion-exchange layered silicate, examples include, but are not limited to, layered silicates described in "Nendo Kobutsu Gaku (Clay mineralogy)" written by Haruo Shirozu (published by Asakura Shoten in 1988), such as a

layered silicate having a 1:1 layer structure and a layered silicate having a 2:1 layer structure.

The 1:1 layer structure shows a basic structure formed by a stack of one tetrahedral sheet and one octahedral sheet as described in "Nendo Kobutsu Gaku (Clay mineralogy)".

The 2:1 layer structure shows a basic structure formed by a stack of two tetrahedral sheets and one octahedral sheet sandwiched therebetween.

As the ion-exchange layered silicate having the 1:1 layer structure, examples include, but are not limited to, kaolin group silicates (such as dickite, nacrite, kaolinite, metahalloysite and halloysite) and serpentine group silicates (such as chrysotile, lizardite and antigorite).

As the ion-exchange layered silicate having the 2:1 layer structure, examples include, but are not limited to, smectite group silicates (such as montmorillonite, beidellite, nontronite, saponite, hectorite and stevensite), vermiculite group silicates (such as vermiculite), mica group silicates (such as mica, illite, sericite and glauconite), attapulgite, sepiolite, palygorskite, bentonite, pyrophyllite, talc and a chlorite group. They may form a mixed layer.

Among them, preferred is the ion-exchange layered silicate having the 2:1 layer structure as the main component. The main component is more preferably a smectite group silicate, and still more preferably montmorillonite.

The type of interlayer cations (cations contained between the layers of the ion-exchange layered silicate) is not particularly limited. From the viewpoint of availability, the main component is preferably an alkali metal of the Group 1 of the periodic table, such as lithium and sodium, an alkali-earth metal of the Group 2 of the periodic table, such as calcium and magnesium, or a transition metal such as iron, cobalt, copper, nickel, zinc, ruthenium, rhodium, palladium, silver, iridium, platinum and gold.

The ion-exchange layered silicate may be used in the dry state, or it may be used in the form of being slurried in liquid.

The form of the ion-exchange layered silicate is not particularly limited. The ion-exchange layered silicate may be in a naturally mined form, or it may be in the form at the time of being artificially synthesized. Also, such an ion-exchange layered silicate may be used, that the form is processed by an operation such as pulverization, granulation and classification.

Of them, the granulated ion-exchange layered silicate is particularly preferred, since the use of such an ion-exchange layered silicate as the catalyst component results in good polymer particle properties.

The ion-exchange layered silicate can be used as it is without a particular treatment. However, it is preferable that the ion-exchange layered silicate is chemically treated. The ion-exchange layered silicate can be chemically treated by the method described in paragraphs 0042 to 0071 in JP-A No. 2009-299046.

The catalyst component (B) preferably used in the present invention is a chemically treated ion-exchange layered silicate. The Al/Si atomic ratio thereof may range from 0.01 to 0.25, preferably from 0.03 to 0.24, and more preferably from 0.05 to 0.23. The Al/Si atomic ration seems to serve as the index of the acid treatment intensity of the clay part.

The aluminum and silicon in the ion-exchange layered silicate are measured by the method for creating a calibration curve by the chemical analysis method defined in JIS and quantifying the aluminum and silicon by X-ray fluorescence.

3. Catalyst component (C)

The catalyst component (C) used in the present invention is an organoaluminum compound, and it is preferably an organoaluminum compound represented by the following general formula (IV):

$$(AlR_nX_{3-n})_m \qquad \text{General Formula (IV)}$$

(where R represents an alkyl group which contains 1 to 20 carbon atoms; X represents halogen, hydrogen, an alkoxy group or an amino group; n represents an integer of from 1 to 3; and m represents an integer of from 1 to 2.)

When X is halogen, it is preferably chlorine; when X is an alkoxy group, it is preferably an alkoxy group which contains 1 to 8 carbon atoms; and when X is an amino group, it is preferably an amino group which contains 1 to 8 carbon atoms.

An organoaluminum compound can be used solely, or several kinds of organoaluminum compounds can be used in combination of two or more.

As the organoaluminum compound, examples include, but are not limited to, trimethylaluminum, triethylaluminum, tri-n-propylaluminum, tri-n-butylaluminum, triisobutylaluminum, tri-n-hexylaluminum, tri-n-octylaluminum, tri-n-decylaluminum, diethylaluminum chloride, diethylaluminum sesquichloride, diethylaluminum hydride, diethylaluminum ethoxide, diethylaluminum dimethylamide, diisobutylaluminum hydride, and diisobutylaluminum chloride. Of them, preferred is a trialkylaluminum represented by the general formula (IV) where m is 1 and n is 3, and an alkylaluminum hydride. More preferred is a trialkylaluminum represented by the general formula (IV) where R contains 1 to 8 carbon atoms.

4. Catalyst preparation

The olefin polymerization catalyst used in the present invention contains the above-described catalyst components. The olefin polymerization catalyst can be obtained by bring them into contact with each other inside or outside a polymerization tank. The olefin polymerization catalyst may be preliminarily polymerized in the presence of an olefin.
The catalyst components are usually brought into contact with each other in an aliphatic or aromatic hydrocarbon solvent. The contact temperature is not particularly limited. The catalyst components are preferably brought into contact at a temperature between -20°C to 150°C. The catalyst components may be brought into contact with each other in any purposeful order. Particularly preferred orders are as follows, according to the type of the components.
In the case of using the catalyst component (C), before bringing the catalyst components (A) and (B) into contact with each other, the catalyst component (C) can be brought into contact with any one or both of the catalyst components (A) and (B); at the same time as bringing the catalyst components (A) and (B) into contact with each other, the catalyst component (C) can be brought into contact with them; or after bringing the catalyst components (A) and (B)into contact with each other, the catalyst component (C) can be brought into contact with them. Preferred is the following method: before bringing the catalyst components (A) and (B)into contact with each other, the catalyst component (C) is brought into contact with any one of them.
Also, after bringing the catalyst components into contact with each other, they can be washed in an aliphatic or aromatic hydrocarbon solvent.
The amounts of the catalyst components (A), (B) and (C) used in the present invention may be any amounts. For example, the amount of the catalyst component (A) used is preferably in a range of from 0.1 μmol to 1000 μmol, and more preferably from 0.5 μmol to 500 μmol, with respect to 1 g of the catalyst component (B).
The amount of the catalyst component (C) used is, in terms of the molar ratio of the aluminum of the catalyst component (C) to the transition metal of the component (A), preferably in a range of from 0.01 to $5\times10^6$, and more preferably from 0.1 to $1\times10^4$.
The branched propylene-based polymer of the present invention can be produced by using the catalyst component having an ability to produce a macromer and the catalyst component having an ability to copolymerize propylene and the macromer. The branched propylene-based polymer of the present invention can be produced by using a single catalyst component having both the ability to produce a macromer and the ability to copolymerize propylene and the macromer. However, for efficient production of the branched propylene-based polymer of the present invention, the method of using the different catalyst components having the different abilities can be selected. That is, the branched propylene-based polymer having the properties of the present invention can be easily produced by using the catalyst component [A-1], which has the ability to produce a macromer, and the catalyst component [A-2], which has the ability to copolymerize propylene and the macromer.
The catalyst components [A-1] and [A-2] used may be in any ratio, as long as the properties of the branched propylene-based polymer of the present invention are fulfilled. The molar ratio of the transition metal of the catalyst component [A-1] to the total amount of the catalyst components [A-1] and [A-2] is preferably 0.30 or more and 0.99 or less.
By changing the ratio, the balance between the melting properties and the catalytic activity can be adjusted. More specifically, a low-molecular-weight terminal vinyl macromer is produced from the catalyst component [A-1], and a high-molecular-weight product is produced from the catalyst component [A-2] by copolymerizing parts of the macromer. Accordingly, by changing the ratio of the catalyst component [A-1], the average molecular weight and molecular weight distribution of the produced polymer, deviation of the molecular weight distribution to the low-molecular-weight side, very-high-molecular-weight components, and (the amount, length and distribution of) branches can be controlled. As a result, the melting properties such as the strain hardening index and the melt tension can be controlled.
The molar ratio of the transition metal of the catalyst component [A-1] to the total amount of the catalyst components [A-1] and [A-2] is preferably 0.30 or more, more preferably 0.40 or more, and still more preferably 0.50 or more. The upper limit is preferably 0.99 or less, and more preferably 0.90 or less. To efficiently obtain the polymer in the present invention with high catalytic activity, the upper limit is preferably in a range of 0.80 or less, and more preferably 0.70 or less.
By using the catalyst component [A-1] in the above range, the balance between the average molecular weight and the catalytic activity can be adjusted.

5. Preliminary polymerization

The olefin polymerization catalyst is preferably subjected to preliminary polymerization in which, by bringing the catalyst into contact with an olefin, a small amount of the olefin is polymerized. By carrying out the preliminary polymerization, gel production can be prevented during the main polymerization. The reason is considered as follows: long-chain branches can be uniformly distributed between the polymer particles during the main polymerization.
The olefin used in the preliminary polymerization is not particularly limited. As the olefin, examples include, but

are not limited to, ethylene, propylene, 1-butene, 1-hexene, 1-octene, 4-methyl-1-pentene, 3-methyl-1-butene, vinylcycloalkane and styrene. Of them, propylene is preferred.

The olefin can be fed into a preliminary polymerization tank by any method. As the method, examples include, but are not limited to, a method for feeding the olefin at a fixed rate, a method for feeding the olefin while keeping the olefin at a fixed pressure, combinations thereof, and a method for changing the feeding method of the olefin in a stepwise manner.

The preliminary polymerization temperature and the preliminary polymerization time are not particularly limited, and they are preferably in a range of from -20°C to 100°C and a range of from 5 minutes to 24 hours, respectively.

As the preliminary polymerization amount, the mass ratio of the preliminarily polymerized polymer to the catalyst component (B) is preferably from 0.01 to 100, and more preferably from 0.1 to 50.

During the preliminary polymerization, the catalyst component (C) can be added. The catalyst component (C) can be washed when the preliminary polymerization is completed.

During or after the catalyst components are brought into contact with each other, a polymer such as polyethylene and polypropylene or a solid inorganic oxide such as silica and titania may be allowed to coexist.

After the preliminary polymerization, the catalyst may be dried. The drying method is not particularly limited. As the drying method, examples include, but are not limited to, drying under reduced pressure, heat drying and drying by dry gas circulation. These methods may be used alone or in combination of two or more kinds. The catalyst may be stirred, oscillated or fluidized in the drying process.

6. Propylene polymerization

As the polymerization style, any method can be employed, as long as the olefin polymerization catalyst and the monomer can be efficiently brought into contact with each other.

In particular, a slurry polymerization method which uses an inert solvent, a bulk polymerization method in which propylene is used as a solvent instead of substantially using an inert solvent, a solution polymerization method, or a gas phase polymerization method in which monomers are kept in a gaseous state without substantially using a liquid solvent, or the like is used.

Also, a continuous polymerization method or a batch polymerization method is applicable.

As the number of the polymerization stages, a multi-stage polymerization of two or more stages can be employed. However, a single-stage polymerization is preferred.

Of them, the bulk polymerization method is preferred. In this case, the polymerization temperature may be from 50°C to a temperature at which propylene reaches criticality.

In addition, for the production of the branched propylene-based polymer of the present invention, the polymerization temperature is preferably 65°C or more.

In the polymerization reaction mediated by the catalyst component [A-1], vinyl groups are formed at the ends by causing a β-methyl elimination reaction as a termination reaction, thereby producing the macromer copolymerizable with propylene. The β-methyl elimination reaction rate is susceptible to the polymerization temperature. In general, as the polymerization temperature increases, the β-methyl elimination rate increases. As a result, the β-methyl elimination rate becomes larger than the propagation reaction rate, and the molecular weight of the macromer decreases.

Accordingly, in the method for producing the branched propylene-based polymer of the present invention, the polymerization temperature is preferably 65°C or more.

By setting the polymerization temperature to 65°C or more, the average molecular weight of the macromer falls within the range preferred in the present invention. Accordingly, branches short in branched chain length can be introduced in the branched propylene-based polymer.

For the above reason, the polymerization temperature is preferably 65°C or more, and more preferably 70°C or more. On the other hand, for bulk polymerization, the upper limit needs to be a temperature equal to or less than the critical temperature of propylene, and it is preferably 90°C or less, and more preferably 85°C or less.

The polymerization pressure is preferably 1.5 MPa or more, more preferably 2.5 MPa or more, and still more preferably 3.5 MPa or more. The upper limit is preferably 4.4 MPa or less, and more preferably 4.0 MPa or less.

The polymerization may be homopolymerization of propylene, or it may be copolymerization using a propylene monomer and, as a comonomer, an α-olefin comonomer which contains 2 to 20 carbon atoms (other than propylene) such as one or more kinds selected from ethylene, 1-butene, 1-hexene, 1-octene and 4-methyl-1-pentene.

The comonomer amount as the copolymerization ratio in the branched propylene-based polymer, is preferably 10% by mole or less, and more preferably 5% by mole or less. The comonomer amount as the amount of the comonomer fed during the polymerization, is preferably 15% by mole or less, and more preferably 7.5% by mole or less.

In addition, for the production of the branched propylene-based polymer of the present invention, hydrogen is used as a molecular weight modifier. The molar ratio of the range of the introduced hydrogen amount is preferably $1.0\times10^{-5}$ or more, more preferably $1.0\times10^{-4}$, and still more preferably $0.5\times10^{-3}$ or more, with respect to the propylene. The upper limit is preferably $1.0\times10^{-2}$ or less, more preferably $0.5\times10^{-2}$ or less, and still more preferably $0.2\times10^{-2}$ or less.

The polymer produced by the mediation of the catalyst component [A-1] shows very slow hydrogen-induced chain transfer. Meanwhile, the polymer produced by the mediation of the catalyst component [A-2] shows relatively fast hydrogen-induced chain transfer; therefore, a high-molecular-weight polymer can be produced when the hydrogen amount is small. Accordingly, when the used hydrogen amount is small, the polymer produced by the catalyst component [A-2], which is a copolymer of polypropylene and the terminal vinyl macromer and which corresponds to the branched propylene-based polymer, is present in the highermolecular-weight side than the polymer produced by the catalyst component [A-1], which is the terminal vinyl macromer and which corresponds to the polymer forming the branched chains.

Accordingly, by using the catalyst components [A-1] and [A-2] in combination and polymerizing the propylene in the condition that the used hydrogen amount is small, the molecular weight distribution of the branched propylene-based polymer can be extended to the high-molecular-weight side, and the branched chain length can be decreased.

The catalyst component [A-1] produces the terminal vinyl macromer, and the catalyst component [A-1] that produced the macromer mediates the copolymerization of the propylene and the macromer by itself to produce a branched macromer having the terminal vinyl groups. Meanwhile, the catalyst component [A-2] does not produce a macromer by itself. It mediates the copolymerization of the propylene and the macromer to produce the branched polymer, only when the macromer produced by the catalyst component [A-1] approaches the catalyst component [A-2].

As described above, in the case of producing the branched propylene-based polymer by the macromer copolymerization method with the combination of the catalyst components [A-1] and [A-2], due to the combined action of the following (1), (2) and (3), many branches short in branched chain length can be introduced into the high-molecular-weight region of the molecular weight distribution of the branched propylene-based polymer: (1) branches short in branched chain length can be introduced by setting the polymerization temperature to 65°C or more; (2) the molecular weight distribution of the branched propylene-based polymer can be extended to the high-molecular-weight side by decreasing the amount of the hydrogen used as the molecular weight modifier; and (3) due to the difference between the contact efficiency of the catalyst component [A-1] and the terminal vinyl macromer and that of the catalyst component [A-2] and the terminal vinyl macromer, the macromer having many branched structures produced by the catalyst component [A-1] that is high in the contact efficiency with the macromer, is introduced into the high-molecular-weight branched polymer produced by the catalyst component [A-2].

More specifically, the component having a molecular weight M of $100\times10^4$ or more in the molecular weight distribution, and the branching index g' at an absolute molecular weight $M_{abs}$ of $100\times10^4$ can fall within the preferred ranges as described above.

Accordingly, the obtained branched propylene-based polymer can obtain the relaxation time distribution in which the amount of the components having a certain short relaxation time is large and the amount of components having an extraordinarily long relaxation time is small.

II-2. The second production method

The second method for producing the branched propylene-based polymer of the present invention is a method in which the production is carried out by the following two processes: a macromer synthesis process and propylene and macromer copolymerization process.

In the macromer synthesis process of the second production method, for example, preferably used is a method for producing a terminal vinyl group-containing, propylene-based polymer by homopolymerizing propylene or copolymerizing propylene with a comonomer selected from $\alpha$-olefins which contains 2 to 20 carbon atoms (other than propylene) using an olefin polymerization catalyst containing the following catalyst components [A-1], (B) and (C):

[A-1]: the compound represented by the general formula (a1),
(B): a compound or ion-exchange layered silicate which is reactive with the catalyst component [A-1] to form an ion pair, and
(C): an organoaluminum compound.

The catalyst components [A-1], (B) and (C) used in the macromer synthesis process are the same as the catalyst components [A-1], (B) and (C) used in the first production method described above.

The olefin polymerization catalyst used in the macromer synthesis process can be prepared by the method described under "4. Catalyst preparation" of the first production method, in which only the catalyst component [A-1] is used as the catalyst component (A).

The olefin polymerization catalyst used in the macromer synthesis process may be subjected to preliminary polymerization by the same method as that described under "5. Preliminary polymerization" of the first production method.

The homopolymerization of propylene or the copolymerization of propylene and the comonomer carried out in the macromer synthesis process, can be carried out by the same method as that described under "6. Propylene polymerization" of the first production method.

The macromer obtained in the macromer synthesis process is preferably a terminal vinyl group-containing propylene-based polymer having the following physical properties (1) to (3). When the macromer has the following physical properties (1) to (3), the melt tension and melt-ductility of the branched propylene-based polymer of the present invention obtained by the copolymerization of the macromer and the propylene, are more likely to improve.

Physical property (1): Number average molecular weight (Mn)

For the terminal vinyl group-containing propylene-based polymer obtained in the macromer synthesis process, the number average molecular weight (Mn) measured by GPC is preferably 30,000 or less, more preferably 28,000 or less, and still more preferably 27,000 or less. The upper limit is not particularly limited, and it is preferably 11,000 or more, more preferably 13,000 or more, and still more preferably 15,000 or more. When the number average molecular weight (Mn) of the macromer is within the range, the molecular weight of the branched chains of the branched propylene-based polymer of the present invention can be sufficiently small. Accordingly, the melt tension and melt-ductility of the branched propylene-based polymer can be improved.

The number average molecular weight (Mn) measurement is carried out by the same method as the number average molecular weight (Mn) measurement by GPC described above under "Property (6) ".

Physical property (2): Terminal vinyl rate

The terminal vinyl rate of the terminal vinyl group-containing propylene-based polymer obtained in the macromer synthesis process, is preferably 0.70 or more, more preferably 0.80 or more, still more preferably 0.85 or more, even more preferably 0.90 or more, and ideally 1.0 (either one of the two terminals of all polymers is a vinyl group). Also, the stereoregularity of the macromer can be improved by increasing the terminal vinyl rate.

The terminal vinyl rate is measured by the method described in JP-A No. 2009-299046. More specifically, the vinyl (propenyl) terminal concentration [Vi] obtained by $^{13}$C-NMR is considered as the ratio to the number of all polymer chains obtained from the number average molecular weight (Mn) obtained by GPC, and the terminal vinyl rate is calculated by the following formula.

$$(\text{Terminal vinyl rate}) = (Mn/42) \times 2 \times [Vi]/1000$$

(where Mn is the number average molecular weight obtained by GPC, and [Vi] is the number of the terminal vinyl groups per 1000 of all skeleton-forming carbon atoms, which is calculated by $^{13}$C-NMR).

Details of the method for measuring the vinyl (propenyl) terminal concentration [Vi] by $^{13}$C-NMR, are as follows.

In a NMR sample tube (diameter 10 mm), a sample (390 mg) is absolutely dissolved in deuterated 1,1,2,2-tetrachloroethane (2.6 ml). Then, the measurement is carried out by the complete proton decoupling method at 125°C. Among the chemical shifts of the three peaks of deuterated 1,1,2,2-tetrachloroethane, the chemical shift of the central peak is set to 74.2 ppm. This is used as the reference for the chemical shifts of other carbon peaks.

Flip angle: 90 degrees
Pulse interval: 10 seconds
Resonant frequency: 100 MHz or more
Accumulation times: 10,000 times or more
Observed range: -20 ppm to 179 ppm

Considering that the carbon 1 and carbon 2 of the following structural formula (B) are detected at 115.5 ppm and 137.6 ppm, respectively, the vinyl (propenyl) terminal concentration [Vi] is calculated by the following formula as the number with respect to 1000 of all skeleton-forming carbon atoms. As used herein, the term "all skeleton-forming carbon atoms" means all carbon atoms other than methyl carbons.

[Vi] = [Peak intensity of Carbon 1]/[Sum of the peak intensities of all skeleton-forming carbons] $\times$ 1000

[Chem. 5]

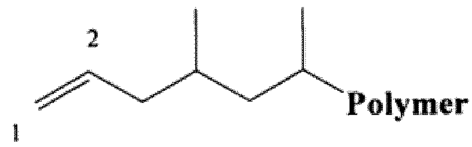

Structural Formula (B)

Physical property (3): LCB number

**[0261]** The terminal vinyl group-containing propylene-based polymer obtained in the macromer synthesis process includes the long-chain branched (LCB) structure moiety represented by the structural formula (A). The lower limit of the LCB number is preferably 0.1 or more, more preferably 0.2 or more, and still more preferably 0.3 or more per 1000 P. The upper limit of the LCB number of the terminal vinyl group-containing propylene-based polymer is not particularly limited, and it is preferably 1.0 or less per 1000 P. When the amount of the long-chain branched (LCB) structure moiety contained in the terminal vinyl group-containing propylene-based polymer used as the macromer, is within the above range, in the subsequent propylene and macromer copolymerization process, due to a decrease in the crystallinity, the propylene and the macromer move through the polymerization medium and easily approach copolymerization active sites, thereby increasing the macromer copolymerization amount. Accordingly, the number of the branch points in the obtained branched propylene-based polymer can be increased.
The measurement of the LCB structure is carried out by the same method as the measurement of the property (10).
The terminal vinyl group-containing propylene-based polymer obtained in the macromer synthesis process can be used as not only a macromer, but also a raw material for a paint, a primer, a surface modifying material, a coating material and so on. As needed, the terminal vinyl group-containing propylene-based polymer obtained in the macromer synthesis process can be used in the form of pellets obtained as follows: the terminal vinyl group-containing propylene-based polymer is mixed with various kinds of additives and various kinds of resins as needed; the mixture is subjected to heat-melt kneading by use of a melt kneader; and the mixture is cut into granules after the heat-melt kneading, thereby obtaining the pellets.
In the propylene and macromer copolymerization process of the second production method, for example, preferably used is a method for copolymerizing the macromer obtained in the macromer synthesis process with propylene or a mixture of propylene and an $\alpha$-olefin which contains 2 to 20 carbon atoms (other than propylene) using an olefin polymerization catalyst containing the following catalyst components [A-2], (B) and (C):

[A-2]: the compound represented by the general formula (a2),
(B): a compound or ion-exchange layered silicate which is reactive with the catalyst component [A-2] to form an ion pair, and
(C): an organoaluminum compound.

The catalyst components [A-2], (B) and (C) used in the copolymerization process are the same as the catalyst components [A-2], (B) and (C) used in the first production method described above.
The olefin polymerization catalyst used in the copolymerization process can be prepared by the method described under "4. Catalyst preparation" of the first production method, in which only the catalyst component [A-2] is used as the catalyst component (A).
The olefin polymerization catalyst used in the copolymerization process may be subjected to preliminary polymerization by the same method as that described under "5. Preliminary polymerization" of the first production method.
The polymerization carried out in the copolymerization process can be carried out by the same method as that described under "6. Propylene polymerization" of the first production method. More specifically, a slurry polymerization method in which the macromer is dissolved in an inert solvent, can be employed.

III. Applications of the branched propylene-based polymer

The branched propylene-based polymer of the present invention can be used as a molding material that is made into the form of pellets as follows: the branched propylene-based polymer is subjected to heat melt-kneading by use of a melt kneader, and after the heat melt-kneading, the polymer is cut into granules, thereby obtaining the pellets. Then, as needed, the branched propylene-based polymer of the present invention can be mixed with various kinds of additives such as a conventionally-known antioxidant, an UV absorber, an antistatic agent, a nucleating agent, a lubricant, a flame

retardant, an anti-blocking agent, a colorant and an inorganic or organic filler, and various kinds of synthetic resins and natural resins.

The molding material in the form of pellets can be molded by any of various kinds of known polypropylene molding methods such as injection molding, extrusion molding, foam molding and blow molding, and the molded material can be used to produce various kinds of molded products such as an injection-molded industrial component, a container, an unstretched film, a uniaxially stretched film, a biaxially stretched film, a sheet, a pipe and fibers.

The branched propylene-based polymer of the present invention excels in the balance between melt fluidity and melt tension. Accordingly, the branched propylene-based polymer of the present invention is preferably used in the fields such as sheet or blow molding in which thickness uniformity is necessary, foam molding in which foam cell diameter uniformity is necessary, and melt spinning in which fiber diameter reduction is necessary.

Also, the branched propylene-based polymer of the present invention can be blended with other resins when used.

Examples

Hereinafter, the present invention will be described in more detail, with reference to examples and comparative examples. The present invention is not limited to these examples, unless it is beyond the gist thereof.

(1) Synthesis of catalyst component (A)

(1-1) Synthesis example of catalyst component [A-1] (Complex 1)

Synthesis of rac-dichloro[1,1'-dimethylsilylene bis{2-(5-methyl-2-thienyl)-4-(4-t-butylphenyl)indenyl}]hafnium:

(1-a) Synthesis of dimethyl bis{2-(5-methyl-2-thienyl)-4-(4-t-butylphenyl)indenyl}silane:

First, 2-(5-methyl-2-thienyl)-4-(4-t-butylphenyl)indene (8.4 g, 24.4 mmol) and THF (150 ml) were put in a 1000 ml reaction container made of glass, and the mixture was cooled to -70°C. Next, an n-butyllithium-hexane solution (15.5 ml, 24.3 mmol, 1.57 mol/L) were added thereto in a dropwise manner. After the dropwise addition, the mixture was stirred for two hours, while gradually returning the mixture temperature to room temperature. The mixture was cooled to -70°C again; 1-methylimidazole (0.02 ml) was added thereto; and dimethyldichlorosilane (1.47 ml, 12.1 mmol) was added thereto in a dropwise manner. After the dropwise addition, the mixture was stirred for one hour, while gradually returning the mixture temperature to room temperature.

Distilled water was added to a reaction solution thus obtained. The mixture thus obtained was transferred to a separatory funnel and washed with brine to be neutral. Sodium sulfate was added thereto, and the reaction solution was dried. The sodium sulfate was subjected to filtration, and the solvent was distilled under reduced pressure, thereby obtaining a light yellow solid (9 g) of dimethyl bis{2-(5-methyl-2-thienyl)-4-(4-t-butylphenyl)indenyl}silane.

(1-b) Synthesis of rac-dichloro[1,1'-dimethylsilylene bis{2-(5-methyl-2-thienyl)-4-(4-t-butylphenyl)indenyl}]hafnium:

First, dimethyl bis{2-(5-methyl-2-thienyl)-4-(4-t-butylphenyl)indenyl}silane (9 g, 12.2 mmol), diethyl ether (30 ml) and toluene (90 ml) were put in a 500 ml reaction container made of glass. On an ice bath, an n-butyllithium-hexane solution (15.5 ml, 24.3 mmol, 1.57 mol/L) was added thereto in a dropwise manner. After the dropwise addition, the mixture temperature was returned to room temperature, and the mixture was stirred for one hour. Toluene (110 ml) was added thereto; the mixture was cooled to -70°C in a dry ice-methanol bath; and then, hafnium tetrachloride (3.9 g, 12.2 mmol) was added thereto. Next, the mixture was stirred overnight, while gradually returning the mixture temperature to room temperature.

The solvent was distilled from the mixture under reduced pressure, and the objective compound was extracted with toluene and then washed with a toluene-hexane mixed solution, thereby obtaining a racemic dichloro[1,1'-dimethylsilylene bis{2-(5-methyl-2-thienyl)-4-(4-t-butylphenyl)indenyl}]hafnium (purity 99% or more) in the form of yellow-orange crystals (1 g, yield 8%).

The identified values of the obtained racemate, which were obtained by the proton nuclear magnetic resonance method ($^1$H-NMR), are as shown below.

$^1$H-NMR($CDCl_3$) identification results

Racemate: δ1.07 (s, 6H), δ1.31 (s, 18H), δ2.48 (s, 6H), δ6.62 (s, 2H), δ6.7-7.1 (m, 4H), δ7.2-7.6 (m, 10H), δ7.41 (d, 2H), δ7.55 (d, 2H)

(Complex 2)

Synthesis of rac-dichloro[1,1'-dimethylsilylene bis{2-(5-methyl-2-furyl)-4-(4-isopropylphenyl)indenyl}]hafnium:

In accordance with the method of Synthesis Example 1 in JP-A No. 2012-149160, rac-dichloro[1,1'-dimethylsilylene bis{2-(5-methyl-2-furyl)-4-(4-isopropylphenyl)indenyl}]hafnium was synthesized.

(1-2) Synthesis example of catalyst component [A-2]

(Complex 3)

Synthesis of rac-dichloro[1,1'-dimethylsilylene bis{2-methyl-4-(4-chlorophenyl)-4-hydroazulenyl}]hafnium:

In accordance with the method of Example 7 in JP-A No. H11-240909, rac-dichloro[1,1'-dimethylsilylene bis{2-methyl-4-(4-chlorophenyl)-4-hydroazulenyl}]hafnium was synthesized.

(2) Synthesis example of catalyst component (B): Chemical treatment of ion-exchange layered silicate

First, 645.1 g of distilled water and 82.6 g of 98% sulfuric acid were fed into a 1 L three-necked flask, which was equipped with stirring blades and a reflux device, and the temperature of the mixture was increased to 95°C.

Next, 100 g of a commercially-available montmorillonite (BENCLAY KK manufactured by Mizusawa Industrial Chemicals, Ltd., Al: 9.78% by mass, Si: 31.79% by mass, Mg: 3.18% by mass, Al/Si (molar ratio): 0.320, average particle diameter: 14 μm) was added thereto, and the mixture was reacted at 95°C for 320 minutes. After the elapse of 320 minutes, 0.5 L of distilled water was added to stop the reaction. Then, the mixture was subjected to filtration, thereby obtaining 255 g of a solid in cake form.

In 1 g of this cake, 0.31 g of chemically-treated montmorillonite (an intermediate) was contained. The chemical composition of the chemically-treated montmorillonite (the intermediate) was as follows.

Al: 7.68% by mass, Si: 36.05% by mass, Mg: 2.13% by mass, Al/Si (molar ratio): 0.222

The cake was mixed with 1545 g of distilled water and slurried. The temperature of the obtained slurry was increased to 40°C. To the slurry, 5.734 g of a lithium hydroxide-hydrate was added in solid form. Then, the slurry was reacted at 40°C for one hour. After the elapse of one hour, the reacted slurry was subjected to filtration and then washed three times with 1 L of distilled water, thereby obtaining a solid in cake form again.

The cake was recovered and dried, thereby obtaining 80 g of a chemically-treated montmorillonite. The chemical composition of the chemically-treated montmorillonite was as follows.

Al: 7.68% by mass, Si: 36.05% by mass, Mg: 2.13% by mass, Al/Si (molar ratio): 0.222, Li: 0.53% by mass

(3) Preparation of catalyst

(3-1) Preparation of catalyst 1

First, 10 g of the chemically-treated montmorillonite obtained in "(2) Synthesis example of catalyst component (B)" was fed into a three-necked flask (volume 1 L). The chemically-treated montmorillonite was mixed with heptane (66 mL) and slurried. Next, triisobutylaluminum (25 mmol: 34.0 mL of a heptane solution with a concentration of 143 mg/mL) was added thereto, and they were stirred for one hour. Then, a slurry thus obtained was washed with heptane to reach a residual liquid rate of 1/100, thereby adjusting the total volume of the slurry to 50 mL.

In another flask (volume 200 mL), the rac-dichloro[1,1'-dimethylsilylene bis{2-(5-methyl-2-thienyl)-4-(4-t-butylphenyl)-indenyl}]hafnium (a complex 1) (126 μmol) produced in the synthesis example of the catalyst component [A-1] was dissolved in toluene (21 mL) to prepare a solution 1-1.

In addition, in another flask (volume 200 mL), the racdichloro[1,1'-dimethylsilylene bis{2-methyl-4-(4-chlorophenyl)-4-hydroazulenyl}]hafnium (a complex 3) (54 μmol) produced in the synthesis example of the catalyst component [A-2] was dissolved in toluene (9 mL) to prepare a solution 1-2.

Triisobutylaluminum (0.22 mmol: 0.3 mL of a heptane solution with a concentration of 143 mg/mL) was added to the 1 L flask containing the chemically-treated montmorillonite. Then, the solution 1-2 (9 mL) was added thereto, and they were stirred at room temperature for 20 minutes.

Next, tri-n-octylaluminium (1.76 mmol: 4.5 mL of a heptane solution with a concentration of 144 mg/mL) was

further added thereto. Then, the solution 1-1 was added thereto, and they were stirred for one hour at room temperature.

Then, 215 mL of heptane was added. A slurry thus obtained was introduced into a 1 L autoclave.

After the internal temperature of the autoclave was controlled to 40°C, preliminary polymerization was carried out, while feeding propylene at a rate of 10 g/hour and keeping the internal temperature at 40°C for 2 hours. Then, the propylene feeding was stopped, and residual polymerization reaction was carried out for 2.5 hours. After the supernatant of a catalyst slurry thus obtained was removed therefrom by decantation, to the residue thus left, triisobutylaluminum (6 mmol: 8.5 mL of a heptane solution with a concentration of 143 mg/mL) was added, and they were stirred for 5 minutes.

A solid thus obtained was dried under reduced pressure for one hour, thereby obtaining 29.6 g of a dried preliminary polymerization catalyst. The preliminary polymerization ratio of the catalyst (a value obtained by dividing the preliminarily polymerized polymer amount by the solid catalyst amount) was 1.96. The preliminary polymerization catalyst was used as the catalyst 1.

(3-2) Preparation of catalyst 2

First, 10 g of the chemically-treated montmorillonite obtained in "(2) Synthesis example of catalyst component (B)" was fed into a three-necked flask (volume 1 L). The chemically-treated montmorillonite was mixed with heptane (66 mL) and slurried. Next, triisobutylaluminum (25 mmol: 34.0 mL of a heptane solution with a concentration of 143 mg/mL) was added thereto, and they were stirred for one hour. Then, a slurry thus obtained was washed with heptane to reach a residual liquid rate of 1/100, thereby adjusting the total volume of the slurry to 50 mL.

In another flask (volume 200 mL), the rac-dichloro[1,1'-dimethylsilylene bis{2-(5-methyl-2-furyl)-4-(4-isopropylphenyl)indenyl}hafnium (a complex 2) (126 μmol) produced in the synthesis example of the catalyst component [A-1] was dissolved in toluene (21 mL) to prepare a solution 2-1.

In addition, in another flask (volume 200 mL), the racdichloro[1,1'-dimethylsilylene bis{2-methyl-4-(4-chlorophenyl)-4-hydroazulenyl}]hafnium (a complex 3) (54 μmol) produced in the synthesis example of the catalyst component [A-2] was dissolved in toluene (9 mL) to prepare a solution 2-2.

Triisobutylaluminum (0.22 mmol: 0.3 mL of a heptane solution with a concentration of 143 mg/mL) was added to the 1 L flask containing the chemically-treated montmorillonite. Then, the solution 2-2 (9 mL) was added thereto, and they were stirred at 50°C for 60 minutes.

Next, tri-n-octylaluminium (1.76 mmol: 4.5 mL of a heptane solution with a concentration of 144 mg/mL) was further added thereto. Then, the solution 2-1 was added thereto, and they were stirred for one hour at room temperature.

Then, 170 mL of heptane was added. A slurry thus obtained was introduced into a 1 L autoclave.

After the internal temperature of the autoclave was controlled to 40°C, preliminary polymerization was carried out, while feeding propylene at a rate of 5 g/hour and keeping the internal temperature at 40°C for 4 hours. Then, the propylene feeding was stopped, and residual polymerization reaction was carried out for one hour. After the supernatant of a catalyst slurry thus obtained was removed therefrom by decantation, to the residue thus left, triisobutylaluminum (6 mmol: 8.5 mL of a heptane solution with a concentration of 143 mg/mL) was added, and they were stirred for 5 minutes.

A solid thus obtained was dried under reduced pressure for one hour, thereby obtaining 30.9 g of a dried preliminary polymerization catalyst. The preliminary polymerization ratio of the catalyst (a value obtained by dividing the preliminarily polymerized polymer amount by the solid catalyst amount) was 2.09. The preliminary polymerization catalyst was used as the catalyst 2.

(4) Examples

[Example 1]

(Polymerization)

A 3 L autoclave was sufficiently dried by introducing nitrogen, while heating the autoclave. Then, the inside of the autoclave was purged with propylene and cooled to room temperature. After 2.8 mL of a solution (143 mg/mL) of triisobutylaluminum in heptane was added thereto, 70 Nml of hydrogen was introduced.

Next, 750 g of liquid propylene were introduced, and then the temperature of the autoclave was increased to 70°C. Then, 70 mg of the catalyst 1, which is the mass excluding the preliminarily polymerized polymer, was fed under pressure to a polymerization tank by high-pressure argon to initiate polymerization. After the temperature was kept at 70°C for one hour, 5 ml of ethanol was injected to stop the polymerization. Accordingly, 189 g of a branched propylene-based polymer was obtained.

(Granulation)

With respect to 100 parts by mass of the branched propylene-based polymer thus obtained, 0.125 parts by mass of phenol-based antioxidant IRGANOX 1010 (product name, tetrakis[methylene-3-(3',5'-di-t-butyl-4'-hydroxyphenyl) propionate]methane manufactured by BASF Japan Ltd.) and 0.125 parts by mass of phosphite-based antioxidant IRGAFOS 168 (product name, tris(2,4-di-t-butylphenyl)phosphite manufactured by BASF Japan Ltd.) were used. They were mixed for three minutes at room temperature, by use of high-speed agitation mixer HENSCHEL MIXER (product name, manufactured by Nippon Coke & Engineering Co., Ltd.) Then, the mixture was melt-kneaded by use of twin screw extruder KZW-25 (product name, manufactured by Technovel Corporation) in the following condition: the screw rotation frequency of the extruder was set to 400 rpm, and the kneading temperature under the hopper was set as follows in stages: 80°C, 120°C and 230°C (this temperature was maintained to the outlet of the die). The molten resin extruded from the strand die of the extruder was drawn, while cooling and solidifying the resin in a cooling water bath. The strand was cut and pelletized by a use of a strand cutter.
The MFR of the obtained pellets ($MFR_{pellet}$) was 1.2 g/10 min. The catalytic activity was 2700 g/ghr. The catalytic activity is a value per unit time obtained by dividing the yield (g) of the polymer by the introduced catalyst amount (g) (the value excluding the preliminarily polymerized polymer).

[Example 2]

Polymerization was carried out in the same manner as Example 1, except that 40 mg (the mass excluding the preliminarily polymerized polymer) of the catalyst 1 and 120 Nml of hydrogen were introduced. As a result, 172 g of a branched propylene-based polymer was obtained.
Granulation was carried out in the same manner as Example 1. As a result, the MFR of the obtained pellets ($MFR_{pellet}$) was 2.6 g/10 min. The catalytic activity was 4300 g/ghr.

[Example 3]

Polymerization was carried out in the same manner as Example 1, except that 40 mg (the mass excluding the preliminarily polymerized polymer) of the catalyst 1 and 180 Nml of hydrogen were introduced. As a result, 196 g of a branched propylene-based polymer was obtained.
Granulation was carried out in the same manner as Example 1. As a result, the MFR of the obtained pellets ($MFR_{pellet}$) was 4.8 g/10 min. The catalytic activity was 4900 g/ghr.

[Example 4]

Polymerization was carried out in the same manner as Example 1, except that 40 mg (the mass excluding the preliminarily polymerized polymer) of the catalyst 1 and 245 Nml of hydrogen were introduced. As a result, 212 g of a branched propylene-based polymer was obtained.
Granulation was carried out in the same manner as Example 1. As a result, the MFR of the obtained pellets ($MFR_{pellet}$) was 8.1 g/10 min. The catalytic activity was 5300 g/ghr.

[Reference Example 1]: Example of side chain homopolymerization method

(Preparation of catalyst 3)

First, 10 g of the chemically-treated montmorillonite obtained in "(2) Synthesis example of catalyst component (B)" was fed into a three-necked flask (volume 1 L). The chemically-treated montmorillonite was mixed with heptane (65 mL) and slurried. Next, triisobutylaluminum (25 mmol: 35 mL of a heptane solution with a concentration of 143 mg/mL) was added thereto, and they were stirred for one hour. Then, a slurry thus obtained was washed with heptane to reach a residual liquid rate of 1/100, thereby adjusting the total volume of the slurry to 50 mL.
In another flask (volume 200 mL), the rac-dichloro[1,1'-dimethylsilylene bis{2-(5-methyl-2-thienyl)-4-(4-t-butylphenyl)-indenyl}]hafnium (the complex 1) (0.15 mmol) produced in the synthesis example of the catalyst component [A-1] was dissolved in toluene (30 mL) to prepare a solution 3-1.
Tri-n-octylaluminium (2.1 mmol: 5.3 mL of a heptane solution with a concentration of 144 mg/mL) was added to the 1 L flask containing the chemically-treated montmorillonite. Then, the solution 3-1 was added thereto, and they were stirred for one hour at room temperature.
Then, 215 mL of heptane was added. A slurry thus obtained was introduced into a 1 L autoclave.
After the internal temperature of the autoclave was controlled to 40°C, preliminary polymerization was carried

out, while feeding propylene at a rate of 10 g/hour and keeping the internal temperature at 40°C for 2 hours. Then, the propylene feeding was stopped, and residual polymerization reaction was carried out for 1.5 hours. After the supernatant of a catalyst slurry thus obtained was removed therefrom by decantation, to the residue thus left, triisobutylaluminum (10 mmol: 8.3 mL of a heptane solution with a concentration of 143 mg/mL) was added, and they were stirred for 5 minutes.

A solid thus obtained was dried under reduced pressure for 40 minutes, thereby obtaining 13.6 g of a dried preliminary polymerization catalyst. The preliminary polymerization ratio of the catalyst (the value obtained by dividing the preliminarily polymerized polymer amount by the solid catalyst amount) was 0.33. The preliminary polymerization catalyst was used as the catalyst 3.

(Polymerization)

A 3 L autoclave was sufficiently dried by introducing nitrogen, while heating the autoclave. Then, the inside of the autoclave was purged with propylene and cooled to room temperature. After 2.8 mL of a solution (143 mg/mL) of triisobutylaluminum in heptane was added thereto, 70 Nml of hydrogen was introduced.

Next, 750 g of liquid propylene were introduced, and then the temperature of the autoclave was increased to 70°C. Then, 300 mg of the catalyst 3, which is the mass excluding the preliminarily polymerized polymer, was fed under pressure to a polymerization tank by high-pressure argon to initiate polymerization. After the temperature was kept at 70°C for one hour, unreacted propylene was quickly purged to stop the polymerization. As a result, about 270 g of a propylene-based polymer was obtained.

The MFR of the obtained propylene-based polymer was 1050 g/10 min. The Mn calculated by GPC was 26500, which can be estimated at 1262 skeleton carbons. The catalytic activity was 900 g/ghr.

[Reference Example 2]: Example of side chain homopolymerization method

Polymerization was carried out in the same manner as Reference Example 1, except that 200 mg (the mass excluding the preliminarily polymerized polymer) of the catalyst 3 and 120 Nml of hydrogen were introduced. As a result, 240 g of a propylene-based polymer was obtained.

The MFR of the obtained propylene-based polymer was 1600 g/10 min. The Mn calculated by GPC was 26000, which can be estimated at 1238 skeleton carbons. The catalytic activity was 1200 g/ghr.

[Reference Example 3]

Polymerization was carried out in the same manner as Reference Example 1, except the following: the temperature of the autoclave was increased to 75°C; 300 mg (the mass excluding the preliminarily polymerized polymer) of the catalyst 3 was introduced; hydrogen was not introduced; and the polymerization was carried out at 75°C for one hour. As a result, 30 g of a propylene-based polymer was obtained.

The MFR of the obtained propylene-based polymer was 1700 g/10 min. The Mn calculated by GPC was 21500, which can be estimated at 1024 skeleton carbons. The catalytic activity was 100 g/ghr.

[Reference Example 4]

Polymerization was carried out in the same manner as Reference Example 1, except the following: the temperature of the autoclave was increased to 80°C; 500 mg (the mass excluding the preliminarily polymerized polymer) of the catalyst 3 was introduced; hydrogen was not introduced; and the polymerization was carried out at 80°C for one hour. As a result, 75 g of a propylene-based polymer was obtained.

The MFR of the obtained propylene-based polymer was 5200 g/10 min. The Mn calculated by GPC was 16500, which can be estimated at 786 skeleton carbons. The catalytic activity was 150 g/ghr.

[Comparative Example 1]

A 3 L autoclave was sufficiently dried by introducing nitrogen, while heating the autoclave. Then, the inside of the autoclave was purged with propylene and cooled to room temperature. After 2.8 mL of a solution (143 mg/mL) of triisobutylaluminum in heptane was added thereto, 210 Nml of hydrogen was introduced.

Next, 750 g of liquid propylene were introduced, and then the temperature of the autoclave was increased to 70°C. Then, 60 mg of the catalyst 2, which is the mass excluding the preliminarily polymerized polymer, was fed under pressure to a polymerization tank by high-pressure argon to initiate polymerization. After the temperature was kept at 70°C for one hour, 5 ml of ethanol was injected to stop the polymerization. Accordingly, 225 g of a branched propylene-based polymer was obtained.

Granulation was carried out in the same manner as Example 1. As a result, the MFR of the obtained pellets ($MFR_{pellet}$) was 1.4 g/10 min. The catalytic activity was 3750 g/ghr.

[Comparative Example 2]

Polymerization was carried out in the same manner as Comparative Example 1, except that 45 mg (the mass excluding the preliminarily polymerized polymer) of the catalyst 2 and 230 Nml of hydrogen were introduced. As a result, 240 g of a branched propylene-based polymer was obtained.

Granulation was carried out in the same manner as Example 1. As a result, the MFR of the obtained pellets ($MFR_{pellet}$) was 2.8 g/10 min. The catalytic activity was 5333 g/ghr.

[Reference Example 5]: Example of side chain homopolymerization method

(Preparation of catalyst 4)

First, 10 g of the chemically-treated montmorillonite obtained in "(2) Synthesis example of catalyst component (B)" was fed into a three-necked flask (volume 1 L). The chemically-treated montmorillonite was mixed with heptane (65 mL) and slurried. Next, triisobutylaluminum (25 mmol: 35 mL of a heptane solution with a concentration of 143 mg/mL) was added thereto, and they were stirred for one hour. Then, a slurry thus obtained was washed with heptane to reach a residual liquid rate of 1/100, thereby adjusting the total volume of the slurry to 50 mL.

In another flask (volume 200 mL), the rac-dichloro[1,1'-dimethylsilylene bis{2-(5-methyl-2-furyl)-4-(4-isopropylphenyl)indenyl}]hafnium (the complex 2) (0.15 mmol) produced in the synthesis example of the catalyst component [A-1] was dissolved in toluene (30 mL) to prepare a solution 4-1.

Tri-n-octylaluminium (2.1 mmol: 5.4 mL of a heptane solution with a concentration of 143 mg/mL) was added to the 1 L flask containing the chemically-treated montmorillonite. Then, the solution 4-1 was added thereto, and they were stirred for 60 minutes at room temperature.

Then, 215 mL of heptane was added. A slurry thus obtained was introduced into a 1 L autoclave.

After the internal temperature of the autoclave was controlled to 40°C, preliminary polymerization was carried out, while feeding propylene at a rate of 10 g/hour and keeping the internal temperature at 40°C for 2 hours. Then, the propylene feeding was stopped, and residual polymerization reaction was carried out for 1.5 hours. After the supernatant of a catalyst slurry thus obtained was removed therefrom by decantation, to the residue thus left, triisobutylaluminum (10 mmol: 8.3 mL of a heptane solution with a concentration of 143 mg/mL) was added, and they were stirred for 5 minutes.

A solid thus obtained was dried under reduced pressure for 40 minutes, thereby obtaining 29.5 g of a dried preliminary polymerization catalyst. The preliminary polymerization ratio of the catalyst (the value obtained by dividing the preliminarily polymerized polymer amount by the solid catalyst amount) was 1.95. The preliminary polymerization catalyst was used as the catalyst 4.

(Polymerization)

A 3 L autoclave was sufficiently dried by introducing nitrogen, while heating the autoclave. Then, the inside of the autoclave was purged with propylene and cooled to room temperature. After 2.8 mL of a solution (143 mg/mL) of triisobutylaluminum in heptane was added thereto, 210 Nml of hydrogen was introduced.

Next, 750 g of liquid propylene were introduced, and then the temperature of the autoclave was increased to 70°C. Then, 150 mg of the catalyst 4, which is the mass excluding the preliminarily polymerized polymer, was fed under pressure to a polymerization tank by high-pressure argon to initiate polymerization. After the temperature was kept at 70°C for one hour, unreacted propylene was quickly purged to stop the polymerization. As a result, about 225 g of a propylene-based polymer was obtained.

The MFR of the obtained propylene-based polymer was 38 g/10 min. The Mn calculated by GPC was 63000, which can be estimated at 3000 skeleton carbons. The catalytic activity was 1500 g/ghr.

[Reference Example 6]: Example of side chain homopolymerization method

Polymerization was carried out in the same manner as Reference Example 5, except that 130 mg (the mass excluding the preliminarily polymerized polymer) of the catalyst 4 and 245 Nml of hydrogen were introduced. As a result, 230 g of a propylene-based polymer was obtained.

The MFR of the obtained propylene-based polymer was 53 g/10 min. The Mn calculated by GPC was 62000, which can be estimated at 2952 skeleton carbons. The catalytic activity was 1769 g/ghr.

[Reference Example 7]: Example of side chain homopolymerization method

Polymerization was carried out in the same manner as Reference Example 1, except that 150 mg (the mass excluding the preliminarily polymerized polymer) of the catalyst 3 and 180 Nml of hydrogen were introduced. As a result, 270 g of a propylene-based polymer was obtained.
The MFR of the obtained propylene-based polymer was 1650 g/10 min. The Mn calculated by GPC was 25000, which can be estimated at 1190 skeleton carbons. The catalytic activity was 1800 g/ghr.

[Reference Example 8]: Example of side chain homopolymerization method

Polymerization was carried out in the same manner as Reference Example 1, except that 100 mg (the mass excluding the preliminarily polymerized polymer) of the catalyst 3 and 245 Nml of hydrogen were introduced. As a result, 300 g of a propylene-based polymer was obtained.
The MFR of the obtained propylene-based polymer was 1700 g/10 min. The Mn calculated by GPC was 21500, which can be estimated at 1024 skeleton carbons. The catalytic activity was 3000 g/ghr.

(5) Measurement and evaluation method

The branched propylene-based polymers obtained in Examples 1 to 4 and Comparative Examples 1 to 3 were measured or evaluated by the following method.

(5-1) Elongational viscosity ($\eta$E), strain hardening index (SHI) and multi-branching index (MBI)

By the method described above under "Property (1)" and "Property (2)", the elongational viscosity at each strain rate (1.0/sec, 0.1/sec, 0.01/sec) was measured; Using each of the measured elongational viscosity value, the strain hardening index (SHI) at each strain rate (d$\varepsilon$/dt) was calculated. Also, the multi-branching index (MBI) was calculated using the calculated strain hardening index (SHI) value at each strain rate (d$\varepsilon$/dt).
The devices and condition used for the elongational viscosity measurement are as follows.

<Measurement devices and condition>

Device: ARES (manufactured by Rheometrics)
Jig: EXTENTIONAL VISCOSITY FIXTURE (manufactured by TA Instruments)
Measurement temperature: 180°C
Strain rates: 1.0/sec, 0.1/sec, 0.01/sec
Production of test piece: A 18 mm × 10 mm sheet (thickness 0.7 mm) was produced by press molding.

(5-2) Melt flow rate (MFR) at a temperature of 230°C and a load of 2.16 kg

The MFR of the pelletized branched propylene-based polymer was measured. Also, the MFR of each of the macromers obtained in Reference Examples 1 to 6 was measured.
As described under "Property (3)", the MFR was measured in accordance with JIS K6921-2 "Plastic-Polypropylene (PP) molding and extrusion materials - Part 2: Method for preparing test pieces and method for obtaining the properties thereof" in the following test condition: 230°C and a load of 2.16 kgf.
Using the measured $MFR_{pellet}$ value, the value calculated by the right-hand side of the formula (1-1) (i.e., "112×log(MFR)+30") and the value calculated by the right-hand side of the formula (1-2) (i.e., "112×log(MFR)+51") were obtained.

(5-3) Percentage of the component soluble to p-xylene at 25°C (CXS)

By the method described under "Property (5)", the percentage of the p-xylene-soluble component (CXS) contained in the branched propylene-based polymer was measured.

(5-4) Molecular weight of the branched side chains

As the catalysts used in the examples and the comparative examples (the catalysts 1 and 2), a combination of the

complex 1 or 2 (the catalyst component [A-1] having the macromer synthesis ability) and the complex 3 (the catalyst component [A-2] having the propylene and macromer copolymerization ability) was used. To measure or estimate the molecular weight of the branched side chains, Reference Examples 1 to 6 were carried out by use of only the complex 1 (the catalyst 3) or the complex 2 (the catalyst 4), both of which have the macromer synthesis ability, and the number average molecular weight (Mn) of the obtained macromer was measured.

The number average molecular weight (Mn) of the macromer was measured by gel permeation chromatography (GPC), by the method described under "Property (6)".

The devices and condition used for the measurement of the number average molecular weight (Mn) of the macromer are as follows.

<Measurement devices and condition>

Device: GPC (ALC/GPC, 150C) manufactured by Waters Corporation
Detector: IR detector MIRAN 1A manufactured by FOXBORO (Measurement wavelength: 3.42 μm)
Column: AD806M/S (three sets) manufactured by Showa Denko K.K.
Mobile phase solvent: o-Dichlorobenzene (ODCB)
Measurement temperature: 140°C
Flow rate: 1.0 mL/min
Injected amount: 0.2 mL

(5-5) Component having a molecular weight M of $100\times10^4$ or more (W$100\times10^4$) and branching index g' ($100\times10^4$) at an absolute molecular weight $M_{abs}$ of $100\times10^4$

By the method described under "Property (8)", component having a molecular weight M of $100\times10^4$ or more (W$100\times10^4$) in the branched propylene-based polymer and the branching index g' ($100\times10^4$) at an absolute molecular weight $M_{abs}$ of $100\times10^4$ were measured.

(5-6) Melting point (Tm)

By the method described under "Property (9)", the melting point (Tm) of the branched propylene-based polymer was measured.

(5-7) Number of long-chain branches (LCB)

By the method described under "Property (10)", for each of the branched propylene-based polymer and the macromers obtained in Reference Examples 1 to 6, the number of long-chain branches (LCB) which contains 7 or more carbon atoms per 1000 monomer units, was measured.

(5-8) Melt tension

By the method described under "Property (4)", the melt tension MT (unit: g) of the branched propylene-based polymer at 230°C was measured by use of CAPILOGRAPH 1B (product name, manufactured by: Toyo Seiki Seisaku-sho, Ltd.) Using the measured MT value, the value calculated by the right-hand side of the formula (2-1) (i.e., "-119xlog(MT) +200") and the value calculated by the right-hand side of the formula (2-2) (i.e., "-119×log(MT)+220") were obtained.

(5-9) Ductility

By the method described under "Property (3)", the maximum drawing rate MaxDraw (unit: m/min) of the branched propylene-based polymer at 230°C was measured.

(5-10) Terminal vinyl rate

By the method described under "Physical property (2)" for the terminal vinyl group-containing propylene-based polymer, the terminal vinyl rate of each of the propylene-based polymers obtained in Reference Examples 1 to 6 was measured.

(6) Evaluation results

The results of the examples, the comparative examples and the reference examples are shown in Tables 1 to 4.

Table 1 shows the following: the polymerization condition of the examples and the comparative examples in which the branched propylene-based polymers were synthesized and, for each of the obtained branched propylene-based polymers, the MFR, the percentage of the xylene-soluble component, the component having a molecular weight M of $100\times10^4$ or more ($w100\times10^4$), the branching index g' ($100\times10^4$) at an absolute molecular weight $M_{abs}$ of $100\times10^4$, the number of the long-chain branches (LCB) which contains 7 or more carbon atoms per 1000 monomer units, the melting point (Tm), and the macromer of the reference example corresponding to the branched chains of the branched propylene-based polymer.

Table 2 shows the following: the polymerization condition of the reference example in which the macromer corresponding to the branched chains of the branched propylene-based polymer obtained in each of the examples and the comparative examples, and, for each of the obtained macromers, the MFR, the number average molecular weight (Mn), the number of the skeleton carbons, the number of the long-chain branches (LCB) which contains 7 or more carbon atoms per 1000 monomer units, and the terminal vinyl rate.

Table 3 shows the following: for the branched propylene-based polymer obtained in each of the examples and the comparative examples, the elongational viscosity $\eta E$ when the Hencky strain ($\varepsilon$) at each strain rate (0.01/sec, 0.1/sec, 1.0/sec) was 1, the strain hardening index (SHI) at each strain rate (0.01/sec, 0.1/sec, 1.0/sec), and the multi-branching index (MBI) obtained from the strain hardening indices (SHI) at strain rates of from 0.01/sec to 1.0/sec.

Table 4 shows the following: for the branched propylene-based polymer obtained in each of the examples and the comparative examples, the MFR, the melt tension (MT) at 230°C, the maximum drawing rate (MaxDraw) at 230°C, the value calculated by the right-hand side of the formula (1-1) (i.e., "$112\times\log(MFR)+30$"), whether the formula (1-1) is satisfied or not, the value calculated by the right-hand side of the formula (1-2) (i.e., "$112\times\log(MFR)+51$"), whether the formula (1-2) is satisfied or not, the value calculate by the right-hand side of the formula (2-1) (i.e., "-119xlog(MT)+200"), whether the formula (2-1) is satisfied or not, the value calculated by the right-hand side of the formula (2-2) (i.e., "$-119\times\log(MT)+220$"), and whether the formula (2-2) is satisfied or not. In Table 4, the symbol "o" indicates the case where the formula (1-1), (1-2), (2-1) or (2-2) is satisfied, and the symbol "$\times$" indicates the case where the formula (1-1), (1-2), (2-1) or (2-2) is not satisfied.

The graph shown in FIG. 5 is a graph with the log (MFR), which is the logarithm of the MFR (MFR 230°C, load 2.16 kg), on the x-axis and the maximum drawing rate (MaxDraw) at 230°C on the y-axis, in which the data of branched propylene-based polymers obtained in examples and comparative examples are plotted.

The graph shown in FIG. 6 is a graph with the log(MT), which is the logarithm of the melt tension (MT) at 230°C, on the x-axis and the maximum drawing rate (MaxDraw) at 230°C on the y-axis, in which the data of the branched propylene-based polymers obtained in the examples and the comparative examples are plotted.

The graph shown in FIG. 7 is a graph with the MFR (MFR 230°C, load 2.16 kg) on the x-axis and the multi-branching index (MBI) on the y-axis, in which the data of the branched propylene-based polymers obtained in the examples and the comparative examples are plotted.

[Table 1]

Table 1

| | | Example 1 | Example 2 | Example 3 | Example 4 | Comparative Example 1 | Comparative Example 2 | Comparative Example 3 |
|---|---|---|---|---|---|---|---|---|
| Catalyst | - | Catalyst 1 | Catalyst 1 | Catalyst 1 | Catalyst 1 | Catalyst 2 | Catalyst 2 | Catalyst 2 |
| Component [A-1] | - | Complex 1 | Complex 1 | Complex 1 | Complex 1 | Complex 2 | Complex 2 | Complex 2 |
| Component [A-2] | - | Complex 3 | Complex 3 | Complex 3 | Complex 3 | Complex 3 | Complex 3 | Complex 3 |
| Catalyst amount | mg | 70 | 40 | 40 | 40 | 60 | 45 | 45 |
| Hydrogen amount | Nml | 70 | 120 | 180 | 245 | 210 | 230 | 245 |
| Polymerization temperature | °C | 70 | 70 | 70 | 70 | 70 | 70 | 70 |
| Yield | g | 189 | 172 | 196 | 212 | 225 | 240 | 270 |
| Activity | g/ghr | 2700 | 4300 | 4900 | 5300 | 3750 | 5333 | 6000 |
| $MFR_{pellet}$ | g/10 min | 1.2 | 2.6 | 4.8 | 8.1 | 1.4 | 2.8 | 7.9 |
| CXS | wt. % | 0.2 | 0.2 | 0.2 | 0.2 | 0.2 | 0.2 | 0.2 |
| $W100\times10^4$ | - | 0.092 | 0.080 | 0.071 | 0.077 | 0.068 | 0.067 | 0.036 |
| LCB Number* | 11000 P | trace | trace | trace | trace | trace | trace | trace |
| $g'(100\times10^4)$ | - | 0.89 | 0.89 | 0.89 | 0.85 | 0.89 | 0.89 | 0.83 |
| Tm | °C | 154.2 | 153.6 | 153.6 | 154.1 | 155.1 | 155.2 | 154.9 |
| Side chain length | - | Reference Example 1 | Reference Example 2 | Reference Example 7 | Reference Example 8 | Reference Example 5 | - | Reference Example 6 |

*LCB Number: Defined as "trace" when less than 0.1/1000 P although the structural formula (A) was detected.

[Table 2]

Table 2

| | | Reference Example 1 | Reference Example 2 | Reference Example 3 | Reference Example 4 | Reference Example 5 | Reference Example 6 | Reference Example 7 | Reference Example 8 |
|---|---|---|---|---|---|---|---|---|---|
| Catalyst | - | Catalyst 3 | Catalyst 3 | Catalyst 3 | Catalyst 3 | Catalyst 4 | Catalyst 4 | Catalyst 3 | Catalyst 3 |
| Component [A-1] | - | Complex 1 | Complex 1 | Complex 1 | Complex 1 | Complex 2 | Complex 2 | Complex 1 | Complex 1 |
| Catalyst amount | mg | 300 | 200 | 300 | 500 | 150 | 130 | 150 | 100 |
| Hydrogen | Nml | 70 | 120 | 0 | 0 | 210 | 245 | 180 | 245 |
| Polymerization temperature | °C | 70 | 70 | 75 | 80 | 70 | 70 | 70 | 70 |
| Yield | g | 270 | 240 | 30 | 75 | 225 | 230 | 270 | 300 |
| Activity | g/ghr | 900 | 1200 | 100 | 150 | 1500 | 1769 | 1800 | 3000 |
| MFR | g/10 min | 1050 | 1600 | 1700 | 5200 | 38 | 53 | 1650 | 1700 |
| Mn | g/mol | 26500 | 26000 | 21500 | 16500 | 63000 | 62000 | 25000 | 21500 |
| Number of skeleton carbons | Number | 1262 | 1238 | 1024 | 786 | 3000 | 2952 | 1190 | 1024 |
| LCB Number | /1000 P | 0.3 | 0.3 | 0.3 | 0.3 | 0.2 | 0.2 | 0.3 | 0.3 |
| Terminal vinyl rate | - | 0.91 | 0.91 | 0.91 | 0.91 | 0.75 | 0.73 | 0.88 | 0.86 |

[Table 3]

Table 3

| | | Example 1 | Example 2 | Example 3 | Example 4 | Comparative Example 1 | Comparative Example 2 | Comparative Example 3 |
|---|---|---|---|---|---|---|---|---|
| $MFR_{pellet}$ | g/10 min | 1.2 | 2.6 | 4.8 | 8.1 | 1.4 | 2.8 | 7.9 |
| $\eta E\varepsilon=1@0.01s^{-1}$ | Pa·s | 453447 | 257352 | 137151 | 78575 | 263498 | 108640 | 32675 |
| $\eta E\varepsilon=1@0.1s^{-1}$ | Pa·s | 178525 | 94745 | 60538 | 40683 | 127202 | 45370 | 20770 |
| $\eta E\varepsilon=1@1.0s^{-1}$ | Pa·s | 48476 | 32302 | 22708 | 15402 | 31410 | 20325 | 12997 |
| SHI@001s$^{-1}$ | - | 0.76 | 0.56 | 0.53 | 0.15 | 1.77 | 1.58 | 0.56 |
| SHI@0.1s$^{-1}$ | - | 1.39 | 1.58 | 1.39 | 1.34 | 1.72 | 1.79 | 1.55 |
| SHI@10s$^{-1}$ | - | 1.73 | 1.73 | 1.67 | 1.75 | 1.88 | 1.75 | 1.50 |
| MBI | - | 0.48 | 0.58 | 0.64 | 0.80 | 0.05 | 0.08 | 0.11 |

[Table 4]

Table 4

| | Example 1 | Example 2 | Example 3 | Example 4 |
|---|---|---|---|---|
| $MFR_{pellet}$ [g/10 min] | 1.2 | 2.6 | 4.8 | 8.1 |
| Melt Tension (MT) @230°C [g] | 11.2 | 8.6 | 5.8 | 3.9 |
| Maximum Drawing Rate (MaxDraw) @230°C [m/min] | 114 | 117 | 167 | 176 |
| log(MFR) | 0.08 | 0.41 | 0.68 | 0.91 |
| 112×log(MFR)+30 | 39 | 76 | 106 | 132 |
| Formula (1-1): MaxDraw > 112×log(MFR)+30 | ○ | ○ | ○ | ○ |
| 112×log(MFR)+51 | 60 | 97 | 127 | 153 |
| Formula (1-2): MaxDraw > 112×log(MFR)+51 | ○ | ○ | ○ | ○ |
| log(MT) | 1.05 | 0.93 | 0.76 | 0.59 |
| -119×log(MT)+200 | 75 | 89 | 109 | 130 |
| Formula (2-1): MaxDraw > -119×log(MT)+200 | ○ | ○ | ○ | ○ |
| -119×log(MT)+220 | 95 | 109 | 129 | 150 |
| Formula (2-2): MaxDraw > -119×log(MT)+220 | ○ | ○ | ○ | ○ |

Table 4 (continued)

| | Comparative Example 1 | Comparative Example 2 | Comparative Example 3 |
|---|---|---|---|
| $MFR_{pellet}$ [g/10 min] | 1.4 | 2.8 | 7.9 |
| Melt Tension (MT) @230°C [g] | 16.6 | 8.6 | 5.1 |
| Maximum Drawing Rate (MaxDraw) @230°C [m/min] | 4 | 53 | 114 |
| log(MFR) | 0.15 | 0.45 | 0.90 |
| 112×log(MFR)+30 | 46 | 80 | 131 |

(continued)

| | Comparative Example 1 | Comparative Example 2 | Comparative Example 3 |
|---|---|---|---|
| Formula (1-1): MaxDraw > 112×log(MFR)+30 | × | × | × |
| 112×log(MFR)+51 | 67 | 101 | 152 |
| Formula (1-2): MaxDraw > 112×log(MFR)+51 | × | × | × |
| log(MT) | 1.22 | 0.94 | 0.71 |
| -119×log(MT)+200 | 55 | 89 | 116 |
| Formula (2-1): MaxDraw > -119×log(MT)+200 | × | × | × |
| -119×log(MT)+220 | 75 | 109 | 136 |
| Formula (2-2): MaxDraw > -119×log(MT)+220 | × | × | × |

As shown in Table 3, for the branched propylene-based polymers of Examples 1 and 2, the multi-branching index (MBI) was from 0.48 to 0.58 and fell within the range of the property (1), and the strain hardening index (SHI@1.0s$^{-1}$) was 1.73 and fell within the range of the property (2). For the branched propylene-based polymers of Examples 3 and 4, the multi-branching index (MBI) was from 0.64 to 0.80 and fell within the range of the property (1), and the strain hardening index (SHI@1.0s$^{-1}$) was from 1.67 to 1.75 and fell within the range of the property (2). As shown in Table 4 and FIG. 5, for the branched propylene-based polymers of Examples 1 to 4, the maximum drawing rate (MaxDraw) at 230°C and the MFR satisfied the relation represented by the formula (1-1), and they also satisfied the relation represented by the formula (1-2). The dotted line shown in FIG. 5 was a line represented by the formula (MaxDraw) = 112×log(MFR)+30, which corresponded to the formula (1-1). In addition, as shown in Table 4 and FIG. 6, for the branched propylene-based polymers of Examples 1 to 4, the maximum drawing rate (MaxDraw) at 230°C and the melt tension (MT) satisfied the relation represented by the formula (2-1), and they also satisfied the relation represented by the formula (2-2). The dotted line shown in FIG. 6 was a line represented by the formula (MaxDraw) = -119×log(MT)+200, which corresponded to the formula (2-1). As shown in Table 4, for the branched propylene-based polymers of Examples 1 and 2, the melt tension (MT) @230°C was from 8.6 g to 11.2 g, and they retained melt tension necessary for molding; meanwhile, the maximum drawing rate (MaxDraw) @230°C was from 114 m/min to 117 m/min, and they were also excellent in ductility when melting. For the branched propylene-based polymers of Examples 1 and 2, the MFR was from 1.2 g/10 min to 2.6 g/10 min and relatively small; they had melt tension and ductility with balance as a propylene-based polymer having such a relatively small MFR; and the ductility relative to the fluidity and the ductility relative to the melt tension were excellent. For the branched propylene-based polymers of Examples 3 and 4, the melt tension (MT) @230°C was from 3.9 g to 5.8 g; the maximum drawing rate (MaxDraw) @230°C was from 167 m/min to 176 m/min; the MFR was from 4.8 g/10 min to 8.1 g/10 min and relatively large; they had melt tension and ductility with balance as a propylene-based polymer having such a relatively large MFR; and the ductility relative to the fluidity and the ductility relative to the melt tension were excellent.

As shown in Table 3, for the branched propylene-based polymers of Comparative Examples 1 and 2, the strain hardening index (SHI@1.0s$^{-1}$) was from 1.75 to 1.88 and fell within the range of the property (2); however, the multi-branching index (MBI) was from 0.05 to 0.08 and smaller than the lower limit of the range of the property (1). For the branched propylene-based polymer of Comparative Example 3, the strain hardening index (SHI@1.0s$^{-1}$) was 1.50 and also fell within the range of the property (2); however, the multi-branching index (MBI) was 0.11 and smaller than the lower limit of the range of the property (1). As shown in Table 4 and FIG. 5, for the branched propylene-based polymers of Comparative Examples 1 to 3, the maximum drawing rate (MaxDraw) at 230°C and the MFR did not satisfy the relation represented by the formula (1-1); moreover, they did not satisfy the relation represented by the formula (1-2). In addition, as shown in Table 4 and FIG. 6, for the branched propylene-based polymers of Comparative Examples 1 to 3, the maximum drawing rate (MaxDraw) at 230°C and the melt tension (MT) did not satisfy the relation represented by the formula (2-1); moreover, they do not satisfy the relation represented by the formula (2-2). As shown in Table 4, for the branched propylene-based polymers of Comparative Examples 1 and 2, the melt tension (MT) @230°C was from 8.6 g to 16.6 g, and they retained melt tension necessary for molding; however, the maximum drawing rate (MaxDraw) @230°C was from 31 m/min to 53 m/min, and they were poor in ductility when melting. For the branched propylene-based polymers of Comparative Examples 1 and 2, the MFR was from 1.4 g/10 min to 2.8 g/10 min and relatively small, and they were poor in ductility when melting, as a propylene-based polymer having such a relatively small MFR, and the ductility relative to the fluidity and the ductility relative to the melt tension were poor. For the branched propylene-based polymer of Comparative Example 3, the melt tension (MT) @230°C was 5.1 g, and the maximum drawing rate (MaxDraw) @230°C was 114 m/min. For the branched propylene-based polymer of Comparative Example 3, the MaxDraw value was the same as Example 1; however, the MFR was 7.9 g/10 min and relatively large. The branched propylene-based polymer of

Comparative Example 3 was insufficient in ductility when melting, as a propylene-based polymer having such a relatively large MFR, and the ductility relative to the fluidity and the ductility relative to the melt tension were poor.

As shown in FIG. 7, according to the graph with the MFR on the x-axis and the multi-branching index (MBI) on the y-axis, in which the data of the branched propylene-based polymers obtained in the examples and the comparative examples were plotted, it was confirmed that the branched propylene-based polymers of the examples were larger in the MBI than the branched propylene-based polymers of the comparative examples.

As shown in Table 1, for the branched propylene-based polymers of Examples 1 to 2, the ratio of the component having a molecular weight M of $100\times10^4$ or more ($W100\times10^4$) in a molecular weight distribution curve, was from 0.080 to 0.092; moreover, for the branched propylene-based polymers of Examples 3 and 4, the ratio ($W100\times10^4$) was from 0.071 to 0.077. Meanwhile, for the branched propylene-based polymers of Comparative Examples 1 and 2, the ratio ($W100\times10^4$) was from 0.067 to 0.068; moreover, for the branched propylene-based polymer of Comparative Example 3, the ratio ($W100\times10^4$) was 0.036.

Accordingly, the branched propylene-based polymers of Examples 1 to 4 were larger in the amount of the components in the high-molecular-weight region than the branched propylene-based polymers of the comparative examples.

As shown in Table 1, the branching index g' ($100\times10^4$) of the branched propylene-based polymers of Examples 1 and 2 at an absolute molecular weight $M_{abs}$ of $100\times10^4$ was 0.89; the branching index g' ($100\times10^4$) of the branched propylene-based polymer of Example 3 was also 0.89; and the branching index g' ($100\times10^4$) of the branched propylene-based polymer of Example 4 was 0.85. For the branched propylene-based polymers of Comparative Examples 1 and 2, the branching index g' ($100\times10^4$) was 0.89, and the branching index g' ($100\times10^4$) of the branched propylene-based polymer of Comparative Example 3 was 0.83.

When comparing only the branching indices g' ($100\times10^4$), the branched propylene-based polymers of Examples 1 and 2 were equivalent to the branched propylene-based polymers of Comparative Examples 1 and 2. However, as described above, the branched propylene-based polymers of Examples 1 and 2 were larger than those of Comparative Examples 1 and 2 in the amount of the components in the high-molecular-weight region in which the molecular weight M was represented by the ratio of the component having a molecular weight M of $100\times10^4$ or more ($W100\times10^4$). Accordingly, the branched propylene-based polymers of Examples 1 and 2 were larger than those of Comparative Examples 1 and 2 in the amount of the branched chains introduced in the high-molecular-weight region. In addition, while the branching index g' ($100\times10^4$) of the branched propylene-based polymers of Examples 1 and 2 was equivalent to the branching index g' ($100\times10^4$) of the branched propylene-based polymers of Comparative Example 3, the $W100\times10^4$ of the branched propylene-based polymers of Examples 1 and 2 was larger than the $W100\times10^4$ of the branched propylene-based polymer of Comparative Example 3. Therefore, the branched propylene-based polymers of Examples 1 and 2 were larger than the branched propylene-based polymer of Comparative Example 3 in the amount of the branched chains introduced in the high-molecular-weight region. As with Examples 1 and 2, when comparing only the branching index g' ($100\times10^4$), the branched propylene-based polymers of Examples 3 and 4 were equivalent to the branched propylene-based polymers of Comparative Examples 1 to 3. However, since the $W100\times10^4$ of the branched propylene-based polymers of Examples 3 and 4 was larger than the $W100\times10^4$ of the branched propylene-based polymers of Comparative Examples 1 to 3, the branched propylene-based polymers of Examples 3 and 4 were larger than Comparative Examples 1 to 3 in the amount of the branched chains introduced in the high-molecular-weight region.

Also, as shown in Tables 1 and 2, as for the length of the side chains introduced in the branched propylene-based polymers of Examples 1 and 2, the number average molecular weight Mn was estimated at 26000 (1238 in terms of the number of skeleton carbons) to 26500 (1262 in terms of the number of skeleton carbons) from the results of Reference examples 1 and 2. As for the length of the side chains introduced in the branched propylene-based polymers of Examples 3 and 4, the number average molecular weight Mn was estimated at 21500 (1024 in terms of the number of skeleton carbons) to 25000 (1190 in terms of the number of skeleton carbons) from the results of Reference Examples 7 and 8. Meanwhile, as for the length of the side chains introduced in the branched propylene-based polymers of Comparative Examples 1 and 2, the number average molecular weight Mn was estimated at 62000 to 63000, from the results of Reference Examples 5 and 6. As for the length of the side chains introduced in the branched propylene-based polymer of Comparative Example 3, the number average molecular weight Mn was estimated at 62000, from the results of Reference Example 6.

Accordingly, the branched propylene-based polymers of Examples 1 to 4 were shorter than the branched propylene-based polymers of the comparative examples in the length of the side chains.

As shown in Table 1, as for the branched propylene-based polymers of Examples 1 and 2, the long-chain branches represented by the structural formula (A) were detected therefrom; however, the number of the long-chain branches (LCB) which contains 7 or more carbon atoms per 1000 monomer units was less than 0.1, and the number of the long-chain branches was small. Also, as for the branched propylene-based polymers of Examples 3 and 4, the long-chain branches represented by the structural formula (A) were detected therefrom; however, the number of the long-chain branches (LCB) which contains 7 or more carbon atoms per 1000 monomer units was less than 0.1, and the number of the long-chain branches was small. Also, as for the branched propylene-based polymers of Comparative Examples 1 to 3, the

number of the long-chain branches (LCB) was less than 0.1.

As for the side chains introduced in the branched propylene-based polymers of Examples 1 and 2, the number of the long-chain branches (LCB) which contains 7 or more carbon atoms per 1000 monomer units was estimated at 0.3, from the results of Reference Example 1 and 2. As for the side chains introduced in the branched propylene-based polymers of Examples 3 and 4, the number of the long-chain branches (LCB) which contains 7 or more carbon atoms per 1000 monomer units was estimated at 0.3, from the results of Reference Examples 7 and 8. As for the side chains introduced in the branched propylene-based polymers of Comparative Examples 1 to 3, the number of the long-chain branches (LCB) was estimated at 0.2, from the results of Reference Examples 5 and 6.

By the molecular structure analysis described above, it was confirmed that the branched propylene-based polymers obtained in Examples 1 to 4 contained, in the high-molecular-amount region, many multi-branching molecules having many branches short in branched chain length per molecule, and the branched propylene-based polymers had the molecular structure having the relaxation time distribution in which the amount of the components having a certain short relaxation time was large and the amount of the components having an extraordinarily long relaxation time was small.

## Claims

**1.** A branched propylene-based polymer having the following properties (1), (2) and (3):

property (1): a multi-branching index (MBI) is 0.45 or more and 1.00 or less;
property (2): a strain hardening index at a strain rate (dε/dt) of 1.0/sec (SHI@$1s^{-1}$) is 0.70 or more and 3.00 or less; and
property (3): a maximum drawing rate (MaxDraw) at 230°C and a melt flow rate (MFR) satisfy a relation represented by the following formula (1-1):

$$(\mathrm{MaxDraw}) > 112\times\log(\mathrm{MFR})+30 \quad \text{Formula (1-1)},$$

wherein the multi-branching index (MBI) is a slope when plotting a logarithm of a strain rate (log(dε/dt)) on the x-axis and a strain hardening index (SHI) at a strain rate of from 0.01/sec to 1.0/sec on the y-axis, while obtaining the strain hardening index (SHI) at a strain rate (dε/dt) of from 0.01/sec to 1.0/sec;
wherein the strain hardening index (SHI) is a slope when, in elongational viscosity measurement at a temperature of 180°C and a given strain rate (dε/dt), plotting a logarithm of a Hencky strain (ε) (log(ε)) on the x-axis and a logarithm of an elongational viscosity (ηE) (log(ηE)) on the y-axis in an interval between Hencky strains 1 and 3;
wherein the maximum drawing rate (MaxDraw) at 230°C is a drawing rate (unit: m/min) just before a string-shaped product is broken, when the drawing rate is increased from 4.0 m/min to 200.0 m/min at an acceleration rate of 1.8 $cm/s^2$ while extruding a resin in a string form in the following conditions and drawing and winding the string-shaped resin on a roller:

resin temperature: 230°C
capillary: 2.0 mm in diameter, 40 mm in length
cylinder diameter: 9.55 mm
cylinder extrusion speed: 20 mm/min; and
wherein the melt flow rate (MFR) is a melt flow rate (MFR) (unit: g/10 min) measured at a temperature of 230°C and a load of 2.16 kg.

**2.** The branched propylene-based polymer according to Claim 1, further satisfying the following property (4):
property (4): the maximum drawing rate (MaxDraw) at 230°C and a melt tension (MT) satisfy a relation represented by the following formula (2-1):

$$(\mathrm{MaxDraw}) > -119\times\log(\mathrm{MT})+200 \quad \text{Formula (2-1)}$$

where the maximum drawing rate (MaxDraw) at 230°C is the same as the formula (1-1), and the melt tension (MT) is a tension (unit: g) detected when drawing and winding the string-shaped resin on the roller at a drawing rate of 4.0 m/min in the measurement of the maximum drawing rate (MaxDraw) at 230°C.

**3.** The branched propylene-based polymer according to Claim 1 or 2, further satisfying the following property (5):

property (5): a percentage of a component soluble to p-xylene at 25°C (CXS) is less than 0.5% by mass.

4. The branched propylene-based polymer according to any one of Claims 1 to 3, further satisfying the following property (6):
property (6): a number average molecular weight (Mn) of branched side chains is 11,000 or more and 30,000 or less.

5. The branched propylene-based polymer according to any one of Claims 1 to 4, further satisfying the following property (7):
property (7): the melt flow rate (MFR) measured at a temperature of 230°C and a load of 2.16 kg is 1 g/10 min or more and 10 g/10 min or less.

6. The branched propylene-based polymer according to any one of Claims 1 to 5, further satisfying the following property (8-1):
property (8-1): a ratio of a component having a molecular weight M of $100\times10^4$ or more ($W100\times10^4$) in a molecular weight distribution curve measured by GPC, is 0.070 or more and 0.100 or less.

7. The branched propylene-based polymer according to any one of Claims 1 to 6, further satisfying the following property (8-2):
property (8-2): a branching index g' ($100\times10^4$), which is a branching index at an absolute molecular weight $M_{abs}$ of $100\times10^4$ measured by 3D-GPC, is 0.80 or more and 0.90 or less.

8. The branched propylene-based polymer according to any one of Claims 1 to 7, further satisfying the following property (9):
property (9): a melting point (Tm) measured by differential scanning calorimetry (DSC) is 150°C or more and 157°C or less.

9. The branched propylene-based polymer according to any one of Claims 1 to 8, further satisfying the following property (10):
property (10): the branched propylene-based polymer comprises a long-chain branched structure moiety represented by the following structural formula (A):

[Chem. 1]

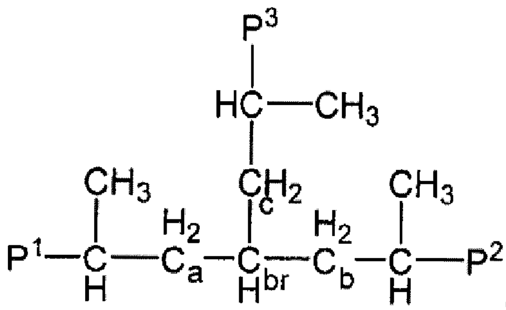

Structural Formula (A)

(where each of $P_1$, $P_2$ and $P_3$ is a residue formed at an end of the branched propylene-based polymer; each of $P_1$, $P_2$ and $P_3$ has one or more propylene units; Cbr represents a methine carbon at a base of a branched chain which contains 7 or more carbon atoms; and each of Ca, Cb and Cc represents a methylene carbon adjacent to the methine carbon (Cbr).)

**Patentansprüche**

1. Verzweigtes Polymer auf Propylenbasis mit den folgenden Eigenschaften (1), (2) und (3):

Eigenschaft (1): ein Mehrfachverzweigungsindex (MBI) beträgt 0,45 oder mehr und 1,00 oder weniger,
Eigenschaft (2): ein Dehnungshärtungsindex bei einer Dehnungsgeschwindigkeit ($d\varepsilon/dt$) von 1,0/s (SHI@$s^{-1}$) beträgt 0,70 oder mehr und 3,00 oder weniger und

Eigenschaft (3): eine maximale Ziehgeschwindigkeit (MaxDraw) bei 230°C und eine Schmelzflussrate (MFR) erfüllen eine durch die folgende Formel (1-1) dargestellte Beziehung:

$$(\mathrm{MaxDraw}) > 112 \times \log(\mathrm{MFR}) + 30 \qquad \text{Formel (1-1)},$$

wobei der Mehrfachverzweigungsindex (MBI) eine Steigung ist, wenn ein Logarithmus einer Dehnungsgeschwindigkeit (log(dε/dt)) auf der x-Achse und ein Dehnungshärtungsindex (SHI) bei einer Dehnungsgeschwindigkeit von 0,01/s bis 1,0/s auf der y-Achse aufgetragen wird, während der Dehnungshärtungsindex (SHI) bei einer Dehnungsgeschwindigkeit (dε/dt) von 0,01/s bis 1,0/s erhalten wird,
wobei der Dehnungshärtungsindex (SHI) eine Steigung ist, wenn bei einer Messung der Dehnviskosität bei einer Temperatur von 180°C und einer gegebenen Dehnungsgeschwindigkeit (dε/dt) ein Logarithmus einer Hencky-Dehnung (ε) (log(ε)) auf der x-Achse und ein Logarithmus einer Dehnviskosität (ηE) (log(ηE) auf der y-Achse in einem Intervall zwischen Hencky-Dehnungen 1 und 3 aufgetragen wird,
wobei die maximale Ziehgeschwindigkeit (MaxDraw) bei 230°C eine Ziehgeschwindigkeit (Einheit: m/min) ist, direkt bevor ein strangförmiges Produkt bricht, wenn die Ziehgeschwindigkeit von 4,0 m/min auf 300,0 m/min bei einer Beschleunigungsrate von 1,8 $cm/s^2$ erhöht wird, während ein Harz in Strangform unter den folgenden Bedingungen extrudiert wird und das strangförmige Harz auf eine Walze gezogen und gewickelt wird:

Harztempertur: 230°C
Kapillare: Durchmesser von 2,0 mm, Länge von 40 nm Zylinderdurchmesser: 9,55 mm
Zylinderextrusionsgeschwindigkeit: 20 mm/min, und
wobei die Schmelzflussrate (MFR) eine Schmelzflussrate (MFR) (Einheit: g/10 min), gemessen bei einer Temperatur von 230°C und einer Last von 2,16 kg, ist.

2. Verzweigtes Polymer auf Propylenbasis gemäß Anspruch 1, das ferner die folgende Eigenschaft (4) erfüllt:
Eigenschaft (4): die maximale Ziehgeschwindigkeit (MaxDraw) bei 230°C und die Schmelzspannung (MT) erfüllen eine durch die folgende Formel (2-1) dargestellte Beziehung:

$$(\mathrm{MaxDraw}) > -119 \times \log(\mathrm{MT}) + 200 \qquad \text{Formel (2-1)}$$

wobei die maximale Ziehgeschwindigkeit (MaxDraw) bei 230°C dieselbe wie Formel (1-1) ist und die Schmelzspannung (MT) eine Spannung (Einheit: g) ist, die beim Ziehen und Aufwickeln des strangförmigen Harzes auf die Walze bei einer Ziehgeschwindigkeit von 4,0 m/min bei der Messung der maximalen Ziehgeschwindigkeit (MaxDraw) bei 230°C erfasst wird.

3. Verzweigtes Polymer auf Propylenbasis gemäß Anspruch 1 oder 2, das ferner die folgende Eigenschaft (5) erfüllt:
Eigenschaft (5): ein Prozentsatz einer löslichen Komponente in p-Xylol bei 25°C (CXS) beträgt weniger als 0,5 Masse-%.

4. Verzweigtes Polymer auf Propylenbasis gemäß einem der Ansprüche 1 bis 3, das ferner die folgende Eigenschaft (6) erfüllt:
Eigenschaft (6): ein zahlenmittleres Molekulargewicht (Mn) der verzweigten Seitenkette beträgt 11.000 oder mehr und 30.000 oder weniger.

5. Verzweigtes Polymer auf Propylenbasis gemäß einem der Ansprüche 1 bis 4, das ferner die folgende Eigenschaft (7) erfüllt:
Eigenschaft (7): die Schmelzflussrate (MFR), gemessen bei einer Temperatur von 230°C und einer Last von 2,16 kg, beträgt 1 g/10 min oder mehr und 10 g/10 min oder weniger.

6. Verzweigtes Polymer auf Propylenbasis gemäß einem der Ansprüche 1 bis 5, das ferner die folgende Eigenschaft (8-1) erfüllt:
Eigenschaft (8-1): ein Verhältnis einer Komponente mit einem Molekulargewicht M von $100\times10^4$ oder mehr ($W100\times10^4$) in einer durch GPC gemessenen Molekulargewichtsverteilungskurve beträgt 0,070 oder mehr und 0,100 oder weniger.

7. Verzweigtes Polymer auf Propylenbasis gemäß einem der Ansprüche 1 bis **6,** das ferner die folgende Eigenschaft (8-2) erfüllt:

Eigenschaft (8-2): ein Verzweigungsindex g' (100×10$^4$) der ein Verzweigungsindex bei einem absoluten Molekulargewicht $M_{abs}$ von 100×10$^4$, gemessenen durch 3D-GPC, ist, beträgt 0,80 oder mehr und 0,90 oder weniger.

8. Verzweigtes Polymer auf Propylenbasis gemäß einem der Ansprüche 1 bis **7,** das ferner die folgende Eigenschaft (9) erfüllt:
Eigenschaft (9): ein Schmelzpunkt (Tm), gemessen durch Differential-Scanning-Kalorimetrie (DSC), beträgt 150°C oder mehr und 157°C oder weniger.

9. Verzweigtes Polymer auf Propylenbasis gemäß einem der Ansprüche 1 bis **8,** das ferner die folgende Eigenschaft (10) erfüllt:
Eigenschaft (10): das verzweigte Polymer auf Propylenbasis umfasst eine durch die folgende Strukturformel (A) dargestellte langkettige verzweigte Struktureinheit:

[Chem. 1]

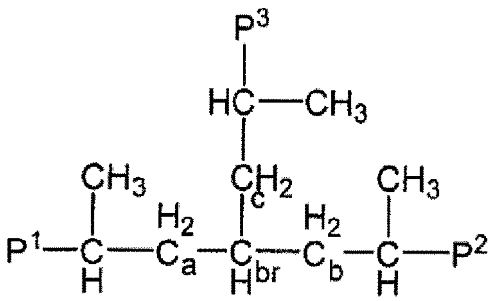

Strukturformel (A)

(worin $P_1$, $P_2$ und $P_3$ jeweils ein Rest sind, der an einem Ende des verzweigten Polymers auf Propylenbasis gebildet ist, $P_1$, $P_2$ und $P_3$ jeweils eine oder mehrere Propyleneinheiten aufweisen, Cbr ein Methinkohlenstoff an einer Basis einer verzweigten Kette darstellt, die 7 oder mehr Kohlenstoffatome enthält, und Ca, Cb und Cc jeweils einen Methylenkohlenstoff neben dem Methinkohlenstoff (Cbr) darstellt).

**Revendications**

1. Polymère ramifié à base de propylène présentant les propriétés (1), (2) et (3) suivantes :

propriété (1) : un indice de ramification multiple (MBI) est 0,45 ou plus et 1,00 ou moins ;
propriété (2) : un indice de durcissement sous contrainte à une vitesse de déformation (dε/dt) de 1,0/sec (SHI@1s$^{-1}$) est 0,70 ou plus et 3,00 ou moins ; et
propriété (3) : un taux d'étirage maximal (MaxDraw) à 230 °C et un indice de fluidité à chaud (MFR) satisfont une relation représentée par la Formule (1-1) suivante :

$$(MaxDraw) > 112\times\log(MFR)+30 \qquad \text{Formule (1-1),}$$

dans lequel l'indice de ramification multiple (MBI) est une pente lors du tracé d'un logarithme d'une vitesse de déformation (log(dε/dt)) sur l'axe x et un indice de durcissement sous contrainte (SHI) à une vitesse de déformation comprise entre 0,01/sec à 1,0/sec sur l'axe y, tout en obtenant l'indice de durcissement sous contrainte (SHI) à une vitesse de déformation (dε/dt) comprise entre 0,01/sec et 1,0/sec ;
dans lequel l'indice de durcissement sous contrainte (SHI) est une pente lors, dans une mesure de viscosité élongationnelle à une température de 180 °C et une vitesse de déformation (dε/dt) donnée, du tracé d'un logarithme d'une contrainte Hencky (ε) (log(ε)) sur l'axe x et d'un logarithme d'une viscosité élongationnelle (ηE) (log(ηE)) sur l'axe y dans un intervalle compris entre les contraintes Hencky 1 et 3 ;
dans lequel le taux d'étirage maximal (MaxDraw) à 230 °C est un taux d'étirage (unité : m/min) juste avant qu'un produit sous forme de chaîne soit rompu, lorsque le taux d'étirage est augmenté de 4,0 m/min à 200,0 m/min à un taux d'accélération de 1,8 cm/s$^2$ lors de l'extrusion d'une résine sous une forme de chaîne dans les conditions suivantes et l'étirage et l'enroulement de la résine sous forme de chaîne sur un rouleau :

température de la résine : 230 °C
capillaire : 2,0 mm de diamètre, 40 mm de longueur
diamètre de cylindre : 9,55 mm
vitesse d'extrusion du cylindre : 20 mm/min ; et
dans lequel l'indice de fluidité à chaud (MFR) est un indice de fluidité à chaud (MFR) (unité : g/10 min) mesuré à une température de 230 °C et une charge de 2,16 kg.

**2.** Polymère ramifié à base de propylène selon la revendication 1, satisfaisant en outre la propriété (4) suivante : propriété (4) : le taux d'étirage maximal (MaxDraw) à 230 °C et une tension de fusion (MT) satisfont une relation représentée par la Formule (2-1) suivante :

$$(\mathrm{MaxDraw}) > -119\times\log(\mathrm{MT})+200 \qquad \text{Formule (2-1)}$$

où le taux d'étirage maximal (MaxDraw) à 230 °C est identique à celui de la Formule (1-1), et la tension de fusion (MT) est une tension (unité : g) détectée lors de l'étirage et de l'enroulement de la résine sous forme de chaîne sur le rouleau à un taux d'étirage de 4,0 m/min dans la mesure du taux d'étirage maximal (MaxDraw) à 230 °C.

**3.** Polymère ramifié à base de propylène selon la revendication 1 ou 2, satisfaisant en outre la propriété (5) suivante : propriété (5) : un pourcentage d'un composant soluble dans le p-xylène à 25 °C (CXS) est inférieur à 0,5 % en masse.

**4.** Polymère ramifié à base de propylène selon l'une quelconque des revendications 1 à 3, satisfaisant en outre la propriété (6) suivante :
propriété (6) : un poids moléculaire moyen en nombre (Mn) des chaînes latérales ramifiées est 11 000 ou plus et 30 000 ou moins.

**5.** Polymère ramifié à base de propylène selon l'une quelconque des revendications 1 à 4, satisfaisant en outre la propriété (7) suivante :
propriété (7) : l'indice de fluidité à chaud (MFR) mesuré à une température de 230 °C et une charge de 2,16 kg est 1 g/10 min ou plus et 10 g/10 min ou moins.

**6.** Polymère ramifié à base de propylène selon l'une quelconque des revendications 1 à 5, satisfaisant en outre la propriété (8-1) suivante :
propriété (8-1) : un rapport d'un composant présentant un poids moléculaire M de $100\times10^4$ ou plus ($W100\times10^4$) dans une courbe de distribution de poids moléculaire mesurée par GPC, est 0,070 ou plus et 0,100 ou moins.

**7.** Polymère ramifié à base de propylène selon l'une quelconque des revendications 1 à 6, satisfaisant en outre la propriété (8-2) suivante :
propriété (8-2) : un indice de ramification g' ($100\times10^4$), qui est un indice de ramification à un poids moléculaire absolu $M_{abs}$ de $100\times10^4$ mesuré par 3D-GPC, est 0,80 ou plus et 0,90 ou moins.

**8.** Polymère ramifié à base de propylène selon l'une quelconque des revendications 1 à 7, satisfaisant en outre la propriété (9) suivante :
propriété (9) : un point de fusion (Tm) mesuré par calorimétrie différentielle à balayage (DSC) est 150 °C ou plus et 157 °C ou moins.

**9.** Polymère ramifié à base de propylène selon l'une quelconque des revendications 1 à 8, satisfaisant en outre la propriété (10) suivante :
propriété (10) : le polymère ramifié à base de propylène comprend un fragment à structure ramifiée à longue chaîne représenté par la formule développée (A) suivante :

[Chim. 1]

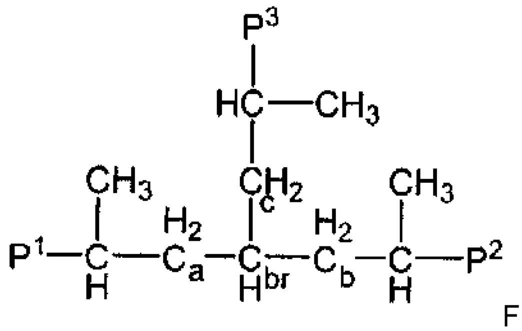

Formule développée (A)

(où chacun de $P_1$, $P_2$ et $P_3$ est un résidu formé à une extrémité du polymère ramifié à base de propylène ; chacun de $P_1$, $P_2$ et $P_3$ comprend une ou plusieurs unités de propylène ; Cbr représente un carbone de méthine à une base d'une chaîne ramifiée qui comprend 7 ou plus atomes de carbone ; et chacun de Ca, Cb et Cc représente un carbone de méthylène adjacent au carbone de méthine (Cbr).)

FIG. 1A

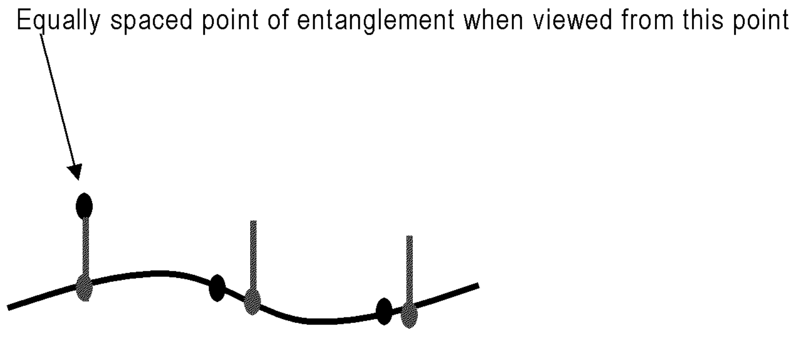


The branch points are always entanglement points.

FIG. 1B

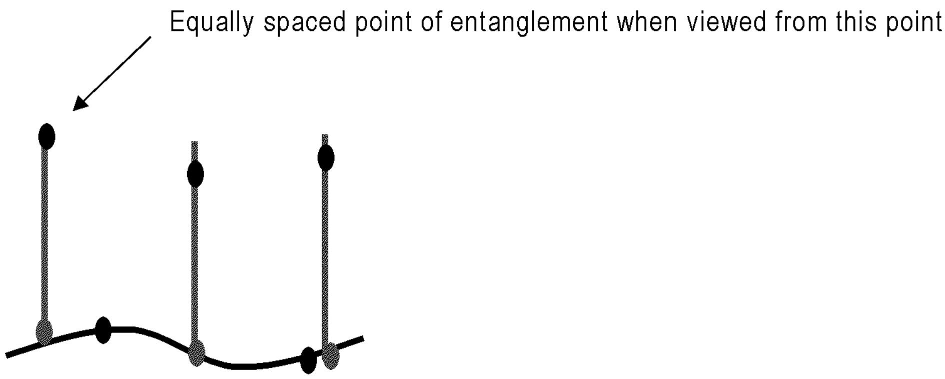


Due to the long branches, the entanglement points are highly likely to appear on the branched chains.

FIG. 2

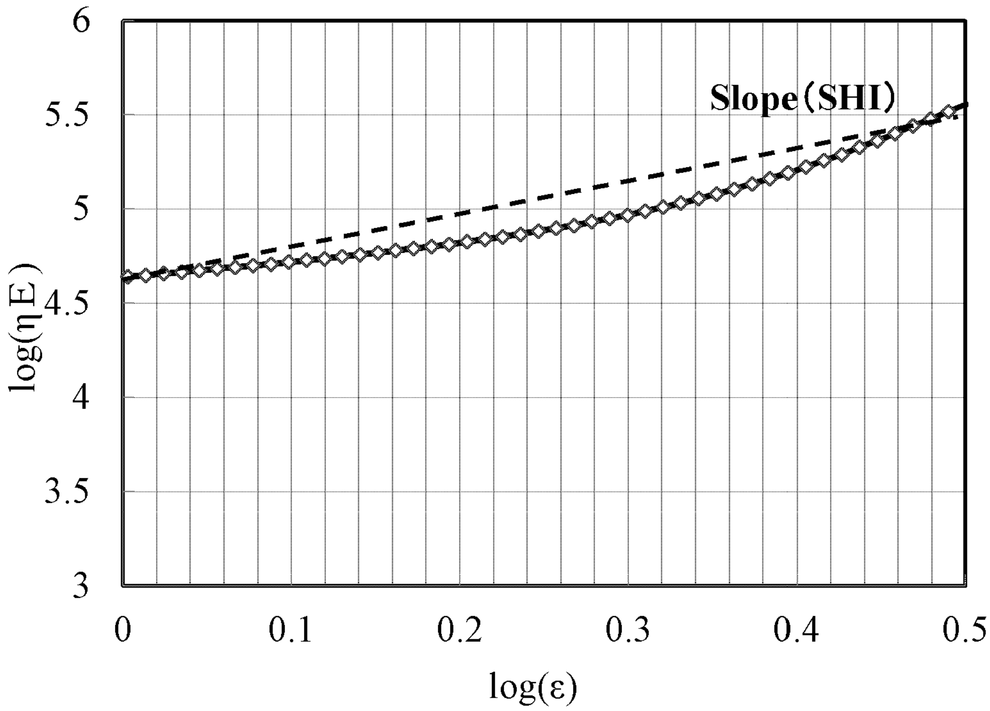
6
5.5
5
4.5
4
3.5
3
log(ηE)
0
0.1
0.2
0.3
0.4
0.5
log(ε)
Slope(SHI)

FIG. 3

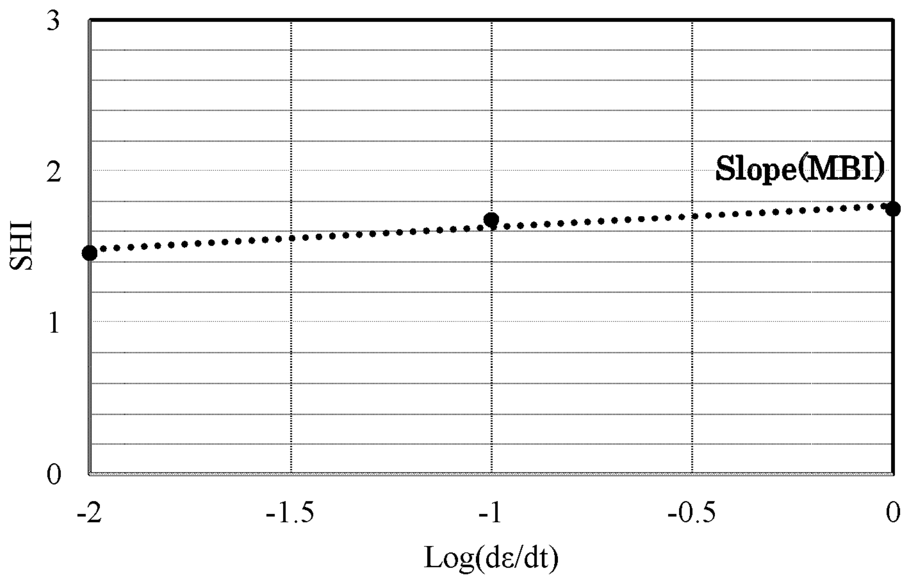
3
2
1
0
SHI
-2
-1.5
-1
-0.5
0
Log(dε/dt)
Slope(MBI)

FIG. 4

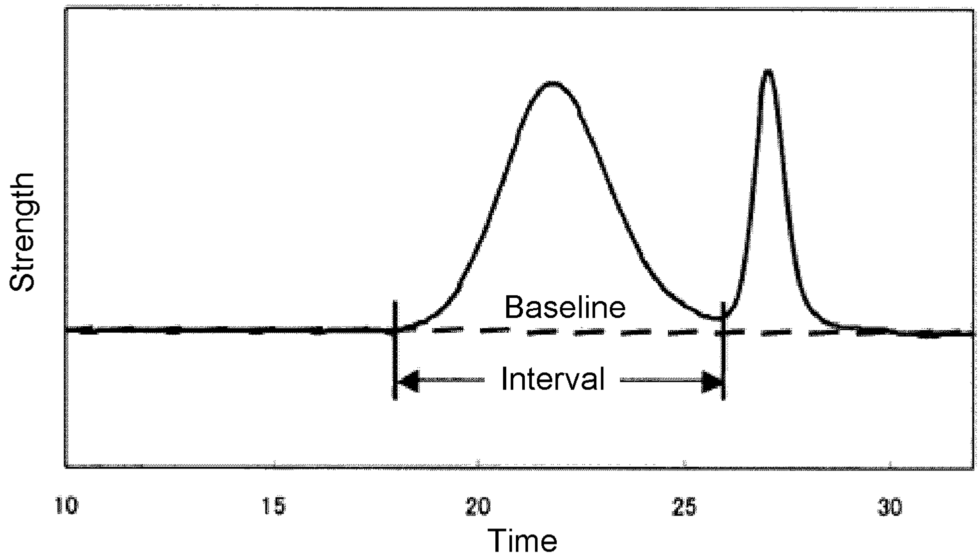
Strength
Baseline
Interval
10
15
20
25
30
Time

FIG. 5

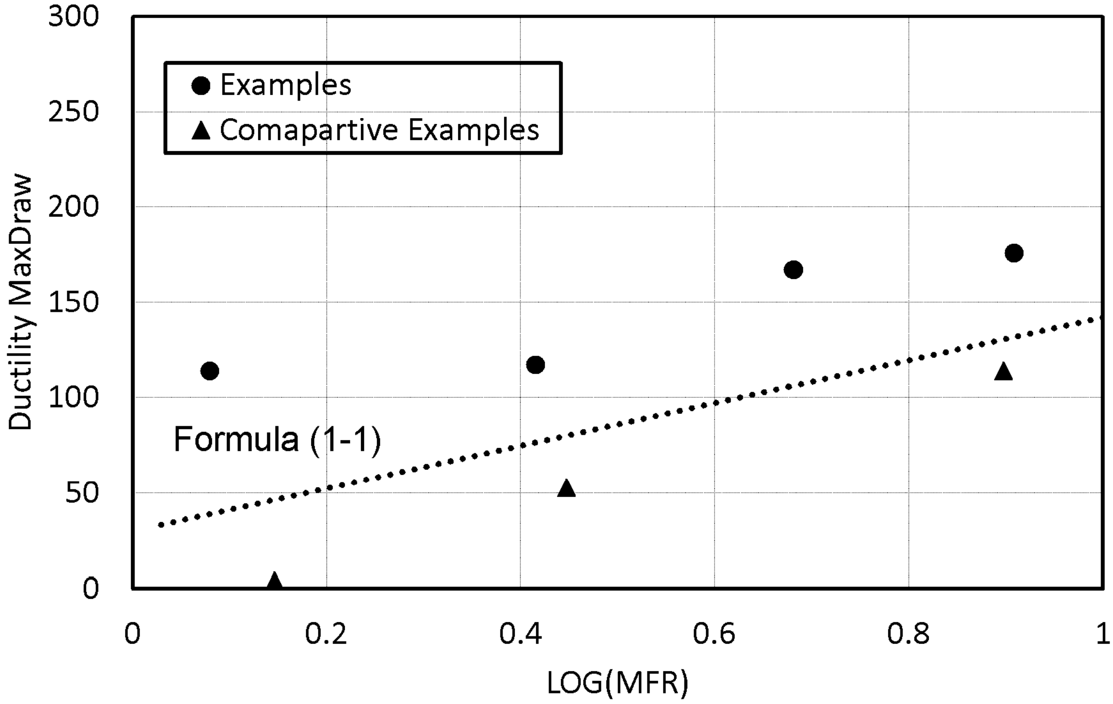
300
250
200
150
100
50
0
Ductility MaxDraw
Examples
Comapartive Examples
Formula (1-1)
0
0.2
0.4
0.6
0.8
1
LOG(MFR)

FIG. 6

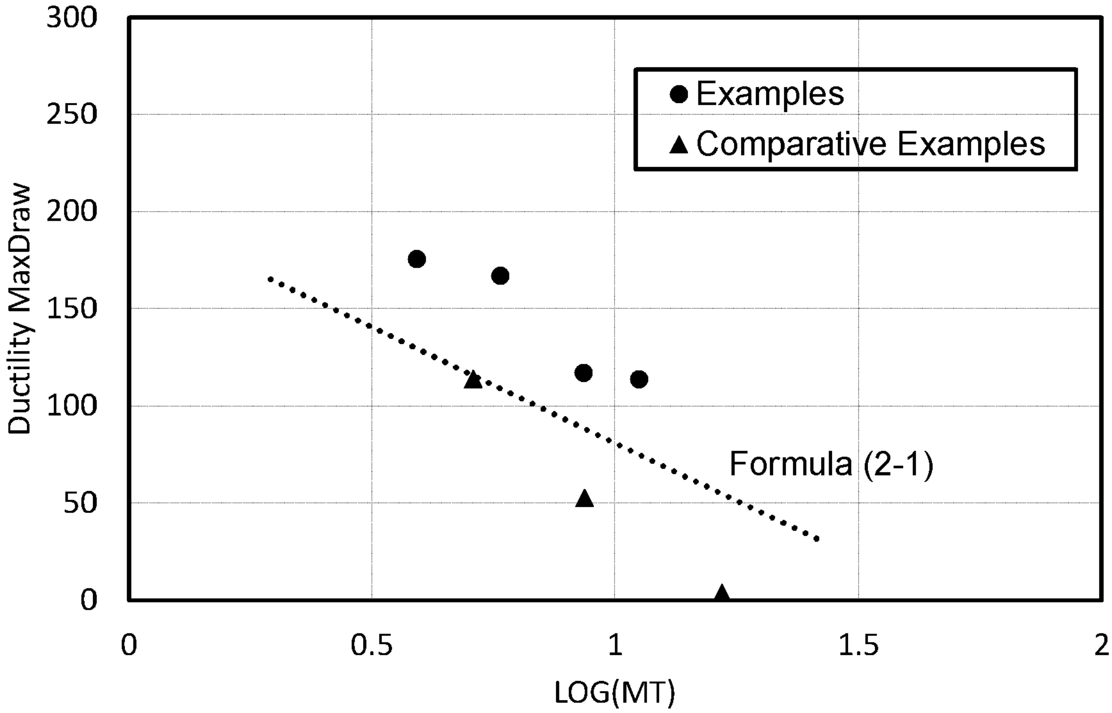
300
250
200
150
100
50
0
Ductility MaxDraw
0
0.5
1
1.5
2
LOG(MT)
Examples
Comparative Examples
Formula (2-1)

FIG. 7

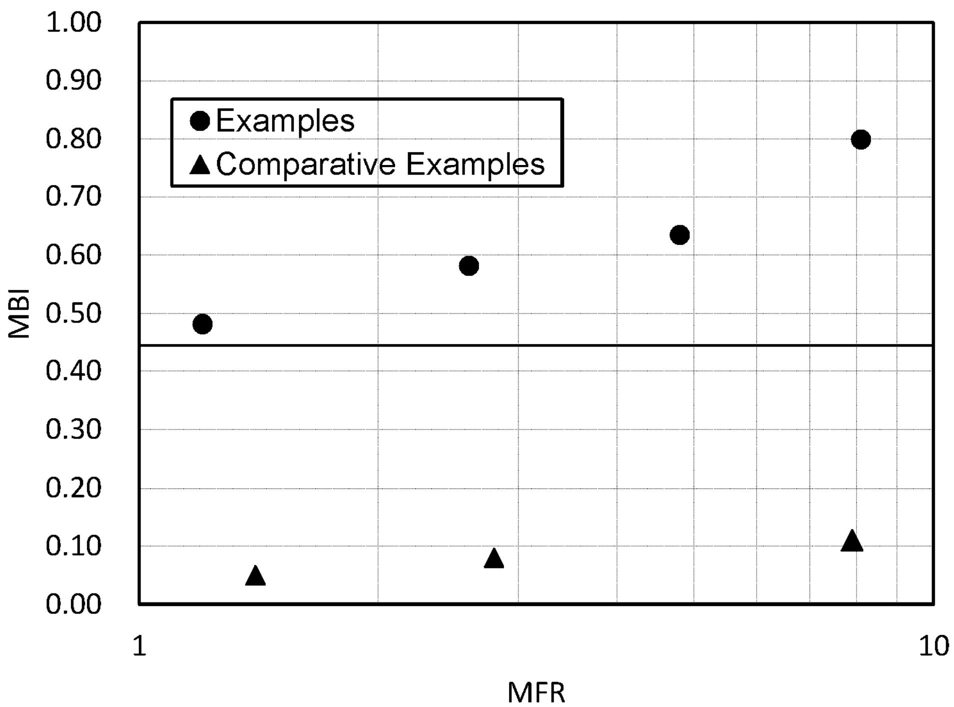
1.00
0.90
0.80
0.70
0.60
0.50
0.40
0.30
0.20
0.10
0.00
MBI
1
10
MFR
Examples
Comparative Examples

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001525460 W
- JP H10338717 A
- JP 2002523575 W
- JP 2001064314 A
- JP 2007154121 A
- JP 2009057542 A
- JP 2009542872 W
- JP 2009299046 A
- JP 2012149160 A
- JP H11240909 A


### Non-patent literature cited in the description


- *Polymer*, vol. 42, 8663
- *Macromolecules*, 1998, vol. 31, 1335
- *Macromolecules*, 2002, vol. 35, 10062
- Developments in Polymer Characterization-4. Applied Science Publishers, 1983
- Developments in Polymer Characterization. Applied Science, 1984, vol. 4
- *Polymer*, 2004, vol. 45, 6495-6505
- *Macromolecules*, 2000, vol. 33, 2424-2436
- *Macromolecules*, 2000, vol. 33, 6945-6952
- *Macromolecules*, 2002, vol. 35 (10)